# FASCICULE DE BREVET EUROPEEN

(11) **EP 3 218 384 B1**
(45) Date de publication et mention de la délivrance du brevet: **07.08.2019**
(21) Numéro de dépôt: 15808718.9
(22) Date de dépôt: 12.11.2015
(51) Int. Cl.: C07F 7/30

(54) **PROCÉDÉ D'HYDROSILYLATION METTANT EN OEUVRE UN CATALYSEUR ORGANIQUE DÉRIVÉ DE GERMYLENE**
VERFAHREN ZUR HYDROSILYLIERUNG MIT EINEM ORGANISCHEN KATALYSATOR AUS GERMYLEN
METHOD OF HYDROSILYLATION IMPLEMENTING AN ORGANIC CATALYST DERIVED FROM GERMYLENE

(30) Priorité: 14.11.2014 FR 1461032
(43) Date de publication de la demande: 20.09.2017
(73) Titulaire: ELKEM SILICONES France SAS, 69003 Lyon (FR); Centre National de la Recherche Scientifique - CNRS, 75016 Paris (FR)
(72) Inventeur: BACEIREDO, Antoine, F-31500 Toulouse (FR); KATO, Tsuyoshi, F-31400 Toulouse (FR); MAO, Yanli, F-31400 Toulouse (FR); BERTHE, Juliette, F-75001 Paris (FR); BOUSQUIÉ, Magali, F-69003 Lyon (FR)
(74) Mandataire: Mekki, Boualem
(86) Numéro de dépôt international: PCT/FR2015/053060
(87) Numéro de publication internationale: WO 2016/075414

(56) Documents cités:
- JULIETTE BERTHE ET AL: "Synthesis and Reactivity of a Phosphine-Stabilized Monogermanium Analogue of Alkynes", JOURNAL OF THE AMERICAN CHEMICAL SOCIETY, vol. 133, no. 40, 12 octobre 2011 (2011-10-12), pages 15930-15933, XP055171750, ISSN: 0002-7863, DOI: 10.1021/ja2073577
- JUAN M. GARCÍA ET AL: "Synthesis and Characterization of Rhodium Complexes with Phosphine-Stabilized Germylenes", INORGANIC CHEMISTRY, vol. 51, no. 15, 6 août 2012 (2012-08-06), pages 8187-8193, XP055171747, ISSN: 0020-1669, DOI: 10.1021/ic300600c
- NOZOMI TAKAGI ET AL: "Theoretical Study of Reactivity of Ge(II)-hydride Compound: Comparison with Rh(I)-Hydride Complex and Prediction of Full Catalytic Cycle by Ge(II)-hydride", JOURNAL OF THE AMERICAN CHEMICAL SOCIETY, vol. 135, no. 24, 19 juin 2013 (2013-06-19), pages 8955-8965, XP055171758, ISSN: 0002-7863, DOI: 10.1021/ja402039b cité dans la demande
- TERRANCE J. HADLINGTON ET AL: "Low Coordinate Germanium(II) and Tin(II) Hydride Complexes: Efficient Catalysts for the Hydroboration of Carbonyl Compounds", JOURNAL OF THE AMERICAN CHEMICAL SOCIETY, vol. 136, no. 8, 26 février 2014 (2014-02-26), pages 3028-3031, XP055171767, ISSN: 0002-7863, DOI: 10.1021/ja5006477 cité dans la demande

## Description

### Domaine de l'invention

La présente invention a pour objet un procédé d'hydrosilylation d'un composé comprenant au moins une fonction cétone ou une fonction aldéhyde avec un composé comprenant au moins une fonction hydrogénosilyle, catalysé par des composés organiques de germanium tri-coordonné. L'invention a également pour objet lesdits composés organiques de germanium tri-coordonné.

### Art antérieur

Lors d'une réaction d'hydrosilylation (également appelée polyaddition), un composé insaturé, c'est-à-dire comprenant au moins une insaturation de type double ou triple liaison réagit avec un composé comprenant au moins une fonction hydrogénosilyle, c'est-à-dire un atome d'hydrogène lié à un atome de silicium. Cette réaction peut par exemple être décrite dans le cas d'une insaturation de type C=O telles que celle portée par les composés cétone ou aldéhyde par : 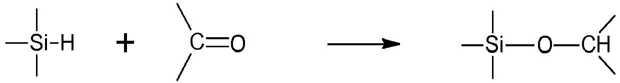 ou dans le cas d'une insaturation de type alcène par : 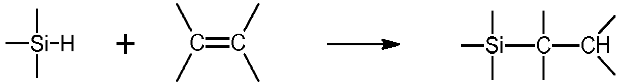 ou encore dans le cas d'une insaturation de type alcyne par :

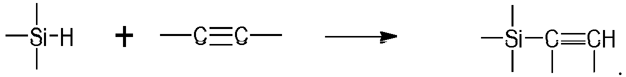

La réaction d'hydrosilylation de composés insaturés est réalisée par catalyse, à l'aide de catalyseur organométallique. Actuellement, le catalyseur organométallique approprié pour cette réaction est un catalyseur au platine. Ainsi, la plupart des procédés industriels d'hydrosilylation, en particulier d'alcènes, sont catalysées par le complexe de platine de Karstedt, de formule générale Pt₂(divinyltétraméthyldisiloxane)₃ (ou en abrégé Pt₂(DVTMS)₃) :

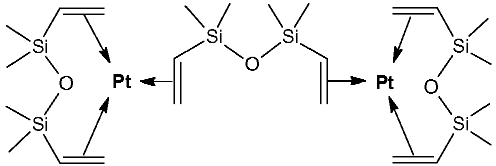

Au début des années 2000, la préparation de complexes de platine - carbène de formule générale : 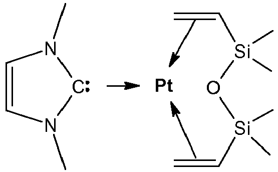 a permis d'avoir accès à des catalyseurs plus stables (voir par exemple la demande internationale de brevet WO 01/42258).

Toutefois, l'utilisation de catalyseurs organométalliques au platine est toujours problématique. Il s'agit d'un métal toxique, cher, en voie de raréfaction et dont le coût fluctue énormément. Son utilisation à l'échelle industrielle est donc difficile. On souhaite donc diminuer autant que possible la quantité de catalyseur nécessaire à la réaction, sans pour autant diminuer le rendement et la vitesse de la réaction. Par ailleurs, on souhaite disposer d'un catalyseur stable au cours de la réaction. Il a été constaté que, lors de la réaction catalysée, le platine métallique pouvait précipiter, ce qui a pour conséquence la formation de colloïdes insolubles dans le milieu réactionnel. Le catalyseur est alors moins actif. De plus, ces colloïdes forment un trouble dans le milieu réactionnel, et les produits obtenus ne sont pas satisfaisants esthétiquement car ils sont colorés.

Dans un contexte mondial de plus en plus concurrentiel et où l'environnement prend chaque jour une place de plus en plus important, développer des procédés d'hydrosilylation catalysés par des composés plus écologiques et économiques est vivement souhaité. La catalyse organique sans métaux est considérée comme une approche prometteuse afin de mettre en pratique ces concepts de chimie verte.

Cependant, les catalyseurs organiques sont instables à l'air et se dégradent rapidement, ce qui rend leur utilisation particulièrement délicate. C'est le cas par exemple des composés organiques d'hydrure de germanium, qui sont connus pour se dégrader rapidement à l'air (Angew. Chem. Int. Ed. 2006, 45, 2602 -2605).

En outre, la réactivité de ces catalyseurs organiques est souvent moins bonne que celles des dérivés organométalliques.

Ainsi, l'un des objectifs de la présente invention est de proposer un procédé d'hydrosilylation catalysé par un nouveau type de composé organique qui soit stable à l'air et dans le milieu réactionnel, et qui ont une bonne réactivité.

Les inventeurs de la présente demande ont développé un procédé d'hydrosilylation catalysé par des composés organiques de germanium tri-coordonné. De façon tout à fait surprenante, ils ont mis en évidence que la structure cyclique particulière de ces composés, présentant un groupe alcoxyle lié à l'atome de germanium, et un groupement phosphine, permettait d'obtenir pour la première fois des composés organiques de germanium tri-coordonné stable à l'air et dans le milieu réactionnel, qui ont une bonne réactivité vis-à-vis de la réaction d'hydrosilylation et, par conséquent, pouvant catalyser ledit procédé d'hydrosilylation.

La réactivité d'un hydrure de germanium tri-coordonné, le (^{Dip}NacNac)GeH, a fait l'objet d'une projection théorique par Takagi et al. (J. Am. Chem. Soc., 2013, 135, 8955-8965) par la théorie de la fonctionnelle de la densité (calcul DFT). Les calculs semblent indiquer que, théoriquement, l'hydrure de germanium tri-coordonné pourrait être un catalyseur d'une réaction d'hydrosilylation de cétone. Cependant, les expériences ultérieures réalisées par Hadlington et al. (J. Am. Chem. Soc., 2014, 136,3028-3031) ont mis en évidence que l'hydrure de germanium tri-coordonné (^{Dip}NacNac)GeH ne réagit qu'avec des cétones activées, et que sa réactivité est moindre que celle de composés de type hydrure de germanium bi-coordonné. Hadlington *et al.* explique que le composé bi-coordonné est plus réactif car moins stable que le composé tri-coordonné. Ainsi, Hadlington *et al.* suggère qu'augmenter la stabilité des hydrures de germanium entrainerait une diminution de leur réactivité.

Les inventeurs de la présente demande ont toutefois mis en évidence que certains composés organiques de germanium tri-coordonné de formule spécifique, stabilisés structurellement, pouvaient catalyser efficacement des procédés d'hydrosilylation.

### Brève description de l'invention

La présente invention a pour objet un procédé d'hydrosilylation d'un composé insaturé (A) comprenant au moins une fonction cétone, ou une fonction aldéhyde, avec un composé (B) comprenant au moins une fonction hydrogénosilyle, ledit procédé étant caractérisé par le fait qu'il est catalysé par un composé organique (C) représenté par la Formule 1: 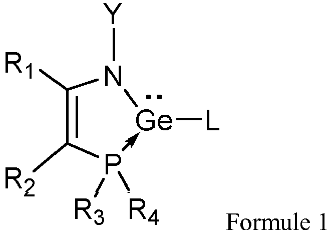 dans laquelle
L est un groupe alcoxyle comprenant 1 à 18 atomes de carbone,
Y est un groupe alkyle contenant de 1 à 20 atomes de carbone, ou un groupe aryle contenant de 6 à 18 atomes de carbone,
les groupes R₁ et R₂, identiques ou différents, représentent un atome d'hydrogène, un groupe alkyle contenant de 1 à 20 atomes de carbone, un groupe alcényle contenant de 2 à 12 atomes de carbone, un groupe aryle contenant de 6 à 18 atomes de carbone, R₁ et R₂ pouvant former ensemble un cycle substitué de 5 à 8 atomes, saturé ou insaturé, et
dans le groupement phosphine 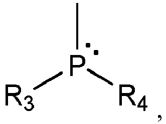 les groupes R₃ et R₄ identiques ou différents, représentent un atome d'hydrogène, un atome d'halogène, un groupe alkyle ou halogénoalkyle contenant de 1 à 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R₃ et R₄ pouvant également former, avec les atomes auxquels ils sont liés, un cycle monocyclique ou polycyclique constitué de 3 à 20 atomes.

En outre, l'invention a aussi pour objet un composé organique (C) représenté par la Formule 1: 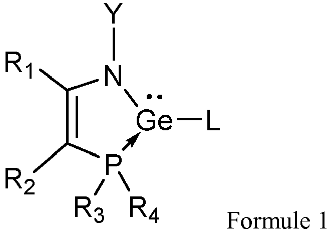 dans laquelle
L est un groupe alcoxyle comprenant 1 à 18 atomes de carbone,
Y est un groupe alkyle contenant de 1 à 20 atomes de carbone, ou un groupe aryle contenant de 6 à 18 atomes de carbone,
les groupes R₁ et R₂ identiques ou différents, représentent un atome d'hydrogène, un groupe alkyle contenant de 1 à 20 atomes de carbone, un groupe alcényle contenant de 2 à 12 atomes de carbone, un groupe aryle contenant de 6 à 18 atomes de carbone, R₁ et R₂ pouvant former ensemble un cycle substitué de 5 à 8 atomes, saturé ou insaturé, et
dans le groupement phosphine 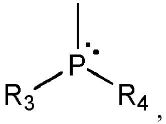 les groupes R₃ et R₄ identiques ou différents, représentent un atome d'hydrogène, un atome d'halogène, un groupe alkyle ou halogénoalkyle contenant de 1 à 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R₃ et R₄ pouvant également former, avec les atomes auxquels ils sont liés, un cycle monocyclique ou polycyclique constitué de 3 à 20 atomes.

Ces composés organiques sont particulièrement adaptés à une utilisation en tant que catalyseur d'hydrosilylation, ce qui constitue également un objet de la présente invention.

Enfin, l'invention a pour objet une composition comprenant :
- au moins un composé insaturé (A) comprenant au moins une fonction cétone, ou une fonction aldéhyde,
- moins un composé (B) comprenant au moins une fonction hydrogénosilyle, et
- un catalyseur choisi parmi les composés organiques (C) de Formule 1 tels que définis ci-dessus.

### Description détaillée de l'invention

### Procédé

Selon un premier aspect, la présente invention concerne un procédé d'hydrosilylation d'un composé (A), comprenant au moins une fonction cétone, ou une fonction aldéhyde, avec un composé (B) comprenant au moins une fonction hydrogénosilyle (≡Si-H), ledit procédé étant caractérisé par le fait qu'il est catalysé par un composé organique (C) représenté par la Formule 1: 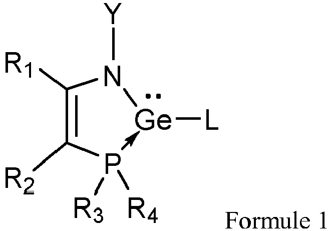 dans laquelle
L est un groupe alcoxyle comprenant 1 à 18 atomes de carbone,
Y est un groupe alkyle contenant de 1 à 20 atomes de carbone, ou un groupe aryle contenant de 6 à 18 atomes de carbone,
les groupes R₁ et R₂ identiques ou différents, représentent un atome d'hydrogène, un groupe alkyle contenant de 1 à 20 atomes de carbone, un groupe alcényle contenant de 2 à 12 atomes de carbone, un groupe aryle contenant de 6 à 18 atomes de carbone, R₁ et R₂ pouvant former ensemble un cycle substitué de 5 à 8 atomes, saturé ou insaturé, et
dans le groupement phosphine 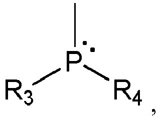 les groupes R₃ et R₄ identiques ou différents, représentent un atome d'hydrogène, un atome d'halogène, un groupe alkyle ou halogénoalkyle contenant de 1 à 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R₃ et R₄ pouvant également former, avec les atomes auxquels ils sont liés, un cycle monocyclique ou polycyclique constitué de 3 à 20 atomes.

Le composé organique (C) est caractérisé en ce qu'il comprend une structure cyclique autour de l'atome de germanium tri-coordonné, un groupe alcoxyle lié à l'atome de germanium, et un groupement phosphine donneur d'un doublet d'électrons à l'atome de germanium.

La Demanderesse a mis en évidence que cette structure cyclique particulière permettait de stabiliser le composé organique (C) sans pour autant altérer sa réactivité.

Par "germanium tri-coordonné", on entend selon l'invention un atome de germanium lié de manière covalente à au moins deux substituants, et à un troisième par liaison dative. Dans le cas du composé organique (C), l'atome de germanium est lié à un atome d'azote et à un ligand L par des liaisons covalentes, et au groupement phosphine par une liaison dative générée par l'atome de phosphore.

Par « alkyle », on entend selon l'invention une chaîne hydrocarbonée saturée, linéaire ou ramifiée, contenant de 1 à 20 atomes de carbone, de préférence de 1 à 8 atomes de carbone. Un groupe alkyle peut être choisi parmi les groupes méthyle, éthyle, isopropyle, n-propyle, tert-butyle, isobutyle, n-butyle, n-pentyle, isoamyle et 1,1-diméthylpropyle.

Par « alcoxyle », on entend selon l'invention un groupe alkyle tel que défini ci-avant lié à un atome d'oxygène, contenant, de préférence, de 1 à 18 atomes de carbone, plus préférentiellement de 1 à 6 atomes de carbone. Un groupe alcoxyle peut être choisi parmi les groupes méthoxy, éthoxy, propoxy et butoxy.

Par « atome d'halogène », on entend selon l'invention un atome choisi dans le groupe constitué par le fluor, le chlore, le brome et l'iode.

Par « alcényle », on entend selon l'invention une chaîne hydrocarburée insaturée, linéraire ou ramifiée contenant de 2 à 12 atomes de carbone.

Par « halogénoalkyle », on entend selon l'invention un groupe alkyle tel que défini ci-avant substitué par un atome d'halogène tel que défini ci-avant.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 3 à 8 atomes de carbone. Lorsque le groupe cycloalkyle est polycyclique, les multiples noyaux cycliques peuvent être rattachés les uns aux autres par une liaison covalente et/ou par un atome spiranique et/ou être condensés les uns aux autres. Un groupe cycloalkyle peut être choisi parmi les groupes cyclopropyle, cyclobutyle, cyclopentyle, cyclohexyle, cycloheptyle, cyclooctyle, adamantane et norborane.

Par « cycloalkyle-alkyle », on entend selon l'invention un groupe cycloalkyle tel que défini ci-avant substitué par un groupe alkyle également tel que défini ci-avant.

Par « aryle », on entend selon l'invention un groupe hydrocarboné aromatique contenant de 6 à 18 atomes de carbone, monocyclique ou polycyclique. Un groupe aryle peut être choisi parmi les groupes phényle, naphtyle, anthracényle et phénanthryle.

Par « aryle-alkyle », on entend selon l'invention un groupe aryle tel que défini ci-avant substitué par un groupe alkyle également tel que défini ci-avant.

Par « acyle », on entend selon l'invention un groupe alkyle, cycloalkyle ou aryle tel que défini ci-avant lié à un groupe C=O.

Par « amine », on entend selon l'invention un groupe amine primaire ou bien un groupe amine secondaire, tertiaire ou quaternaire dont le ou les substituants sont choisis parmi un groupe alkyle tel que défini ci-avant.

Selon un mode de réalisation particulièrement préféré de l'invention, , le ligand L du composé organique (C) est le groupe éthoxy.

Avantageusement, le ligand L permet de stabiliser le composé organique (C) sans altérer sa réactivité lorsqu'il catalyse le procédé selon l'invention.

Selon un mode de réalisation de l'invention, les groupes R₃ et R₄ portés par le groupement phosphine peuvent former un cycle constitué de 3 à 20 atomes, comprenant éventuellement une ou plusieurs insaturations, et comprenant éventuellement un ou plusieurs hétéroatomes choisis parmi O, N, Si et P. Le cycle, monocyclique ou polycyclique, peut éventuellement être substitué une ou plusieurs fois par un atome d'halogène, par un groupe alkyle, par un groupe cycloalkyle, par un groupe cycloalkyle-alkyle, par un groupe aryle, par un groupe aryle-alkyle, par un groupe acyle, par un groupe amine, par un groupe hydroxyle ou par un groupe alcoxy.

Selon un mode de réalisation préféré, R₃ et R₄ forment, avec les atomes auxquels ils sont liés, un monocycle constitué de 3 à 10 atomes, de préférence de 3 à 6 atomes. De préférence ledit monocycle est saturé et peut éventuellement comprendre un ou plusieurs hétéroatomes choisis parmi N, Si et P, de préférence parmi N et Si. Ledit monocycle peut aussi être substitué une ou plusieurs fois par un groupe alkyle et/ou par un groupe aryle-alkyle, plus préférentiellement encore par un groupe alkyle.

Selon un mode de réalisation particulièrement préféré, le groupement phosphine porté par le composé organique (C) est représenté par les formules : 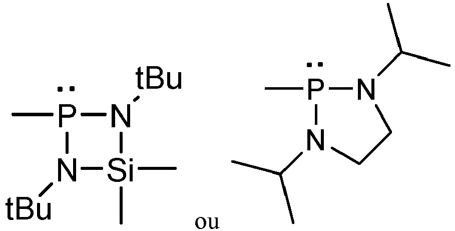 où *t*Bu est le groupe *tert*-butyle.

Sans vouloir être lié par une quelconque théorie, le groupement phosphine semble permettre une complexation intramoléculaire de l'atome de germanium dans le composé organique (C), améliorant ainsi sa stabilité à l'air et dans le milieu réactionnel.

Dans le composé organique (C), le groupe Y est un groupe alkyle contenant de 1 à 20 atomes de carbone ou un groupe aryle contenant de 6 à 18 atomes de carbone. De préférence, le groupe Y est un groupe aryle en C₆-C₁₀ substitué une ou plusieurs fois par un groupe alkyle et/ou par un groupe aryle-alkyle. Plus préférentiellement, le groupe Y est un groupe phényle substitué par un groupe alkyle, en particulier par le méthyle et/ou l'*iso*propyle.

Selon un mode de réalisation particulièrement préféré de l'invention, le groupe Y est choisi parmi le 2,6-*i*Pr₂-C₆H₃ ou le 2,4,6-triméthyle-C₆H₂.

Avantageusement, le groupe Y permet de stabiliser ledit composé sans altérer sa réactivité lorsqu'il catalyse le procédé selon l'invention.

Dans le composé organique (C) représenté par la Formule 1, les groupes R₁ et R₂, identiques ou différents, représentent un atome d'hydrogène, un groupe alkyle contenant de 1 à 20 atomes de carbone , un groupe alcényle contenant de 2 à 12 atomes de carbone, un groupe aryle contenant de 6 à 18 atomes de carbone, R₁ et R₂ pouvant former ensemble un cycle substitué de 5 à 8 atomes, saturé ou insaturé.

De préférence, R₁ et R₂ peuvent former ensemble un cycle substitué de 6 atomes dans lequel deux substituants forment un pont à 1 atome sur ledit cycle.

Selon un mode de réalisation préféré de l'invention, le composé organique (C) présente la structure suivante : 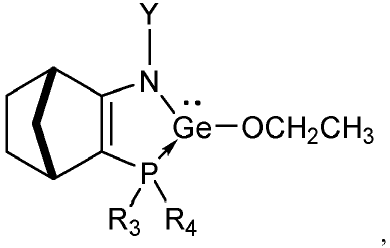 dans laquelle
Y est 2,6-*i*Pr₂-C₆H₃ ou 2,4,6-triméthyle-C₆H₂, et
le groupement phosphine est représenté par les formules : 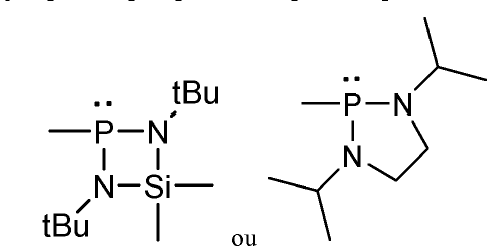 où *t*Bu est le groupe *tert*-butyle.

Selon un autre mode de réalisation encore préféré de l'invention, le composé organique (C) présente la structure suivante : 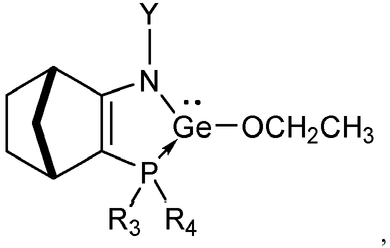 dans laquelle
Y est 2,4,6-triméthyle-C₆H₂,
le groupement phosphine est représenté par la formule : 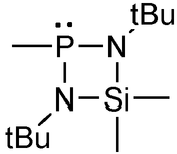 où *t*Bu est le groupe *tert*-butyle.

Tout composé comprenant au moins une fonction cétone ou aldéhyde, peut être utilisé dans le procédé selon l'invention, dans la mesure où il ne contient pas de fonction chimique réactive pouvant gêner, voire empêcher la réaction d'hydrosilylation.

Selon un mode de réalisation, le composé (A) comprend une ou plusieurs fonctions cétones et de 2 à 40 atomes de carbone. Le composé insaturé (A) peut alors, de préférence, être choisi parmi la trifluoroacétophénone, la diéthylcétone et l'acétophénone.

Selon un autre mode de réalisation, le composé (A) comprend une ou plusieurs fonctions aldéhydes et de 2 à 40 atomes de carbone. Le composé insaturé (A) peut alors, de préférence, être choisi parmi l'hexanal, le 4-fluorobenzaldéhyde et le benzaldéhyde.

Le composé (A) peut, de façon préférée, être choisi dans le groupe constitué par les acrylates et les méthacrytales d'alkyles en C₁ à C₄, l'acide acrylique ou méthacrylique.

Le procédé d'hydrosilylation selon l'invention met également en oeuvre un composé (B) comprenant au moins une fonction hydrogénosilyle. Selon un mode de réalisation, le composé (B) comprenant au moins une fonction hydrogénosilyle est un composé silane ou polysilane comprenant au moins un atome d'hydrogène lié à un atome de silicium.

Par composé « silane », on entend dans la présente invention les composés chimiques comprenant un atome de silicium lié à quatre atomes d'hydrogènes ou à des substituants organiques. Par composé « polysilane », on entend dans la présente invention les composés chimiques possédant au moins un motif ≡Si-Si≡.

Selon un mode de réalisation particulièrement préféré, le composé (B) est le phénylsilane.

Le composé (B) peut également être un composé organopolysiloxane comprenant au moins un atome d'hydrogène lié à un atome de silicium. Par composé « organopolysiloxane », on entend dans la présente invention les composés chimiques possédant au moins un motif ≡Si-O-Si=. Le composé organopolysiloxane comprend au moins deux atomes de silicium, de préférence au moins 3 atomes de silicium ou plus. Ledit composé organopolysiloxane peut avantageusement être un organopolysiloxane (couramment dénommés POS) comprenant au moins un motif de formule (III) :

H_{d}UₑSiO_{(4-(d+e))/2} (III)

dans laquelle :
- les radicaux U, identiques ou différents, représentent un radical monovalent différent d'un atome d'hydrogène,
- d et e représentent des nombres entiers, d valant 1 ou 2, e valant 0, 1 ou 2 et (d+e) valant 1, 2 ou 3 ;
et éventuellement d'autres motifs de formule (IV) :

U_{f}SiO_{(4-f)/2} (IV)

dans laquelle U a la même signification que ci-dessus, et f représente un nombre entier compris entre 0 et 3.

Il est entendu dans la formule (III) et dans la formule (IV) ci-dessus que, si plusieurs groupes U sont présents, ils peuvent être identiques ou différents les uns des autres.

Dans la formule (III), le symbole d peut préférentiellement valoir 1.

De plus, dans la formule (III) et dans la formule (IV), U peut représenter un radical monovalent choisi dans le groupe constitué par un groupe alkyle ayant 1 à 8 atomes de carbone, éventuellement substitué par au moins un atome d'halogène, et un groupe aryle. U peut avantageusement représenter un radical monovalent choisi dans le groupe constitué par méthyle, éthyle, propyle, 3,3,3-trifluoropropyle, xylyle, tolyle et phényle. Des exemples de motifs de formule (III) sont les suivants : H(CH₃)₂SiO_{1/2}, HCH₃SiO_{2/2} et H(C₆H₅)SiO_{2/2}.

L'organopolysiloxane peut présenter une structure linéaire, ramifié, cyclique ou en réseau. Des exemples d'organopolysiloxanes pouvant être des composés organopolysiloxane comprenant au moins un atome d'hydrogène lié à un atome de silicium sont :
- un poly(diméthylsiloxane) à extrémités hydrogénodiméthylsilyles;
- un poly(diméthylsiloxane-co-méthylhydrogénosiloxane) à extrémités triméthylsilyles;
- un poly(diméthylsiloxane-co-méthylhydrogénosiloxane) à extrémités hydrogénodiméthylsilyles ;
- un poly(méthylhydrogénosiloxane) à extrémités triméthylsilyles ; et
- un poly(méthylhydrogénosiloxane) cycliques.

De préférence, le composé (B) est un composé organopolysiloxane comprenant par molécule au moins deux fonctions hydrogénosilyle (Si-H).

Enfin, le composé (B) peut être un polymère organique comprenant des fonctions hydrogénosilyles en positions terminales. Le polymère organique peut par exemple être un polyoxoalkylène, un polymère hydrocarboné saturé ou un poly(méth)acrylate. Des polymères organiques comprenant des fonctions réactives en positions terminales sont notamment décrits dans les demandes de brevet US 2009/0182099 et US 2009/0182091.

Selon un mode de réalisation particulier de la présente invention, il est possible que le composé insaturé (A) et le composé (B) comprenant au moins une fonction hydrogénosilyle soient un seul et même composé, comprenant d'une part au moins une fonction cétone, une fonction aldéhyde, une fonction alcène et/ou une fonction alcyne, et d'autre part au moins un atome de silicium et au moins un atome d'hydrogène lié à l'atome de silicium. Ce composé peut alors être qualifié de « bifonctionnel », et il est susceptible de réagir sur lui-même par réaction d'hydrosilylation. L'invention peut donc aussi concerner un procédé d'hydrosilylation d'un composé bifonctionnel avec lui-même, ledit composé bifonctionnel comprenant d'une part au moins une fonction cétone, une fonction aldéhyde, une fonction alcène et/ou une fonction alcyne - de préférence au moins une fonction alcène et/ou au moins une fonction alcyne - , et d'autre part au moins un atome de silicium et au moins un atome d'hydrogène lié à l'atome de silicium, ledit procédé étant caractérisé par le fait qu'il est catalysé par un composé organique (C) tel que décrit ci-dessus.

Des exemples d'organopolysiloxanes pouvant être des composés bifonctionnels sont :
- un poly(diméthylsiloxane-co-hydrogénométhylsiloxane-co-vinylméthyl-siloxanes) à extrémités diméthylvinylsilyles;
- un poly(diméthylsiloxane-co-hydrogénométhylsiloxane-co-vinylméthyl-siloxanes) à extrémités diméthylhydrogénosilyles ; et
- un poly(diméthylsiloxane-co-hydrogénométhylsiloxane-co-propylglycidyléther-méthylsiloxane) à extrémités triméthylsilyles.

Lorsqu'il est question de la mise en oeuvre du composé insaturé (A) et du composé (B) comprenant au moins une fonction hydrogénosilyle, l'homme du métier comprend qu'on entend également la mise en oeuvre d'un composé bifonctionnel.

La réaction d'hydrosilylation peut être réalisée dans un solvant ou en l'absence de solvant. En variante, un des réactifs, par exemple le composé insaturé (A), peut jouer le rôle de solvant. Des solvants appropriés sont des solvants miscibles avec le composé (B).

La réaction d'hydrosilylation peut être conduite à une température comprise entre 15°C et 300°C, préférentiellement entre 20°C et 240°C, plus préférentiellement entre 70°C et 200°C, plus préférentiellement entre 50°C et 140°C, et encore plus préférentiellement entre 50°C et 100°C.

### Composé organique (C)

L'invention a également pour objet un composé organique (C) représenté par la Formule 1 décrit précédemment, y compris tous les modes de réalisation dudit composé organique décrits précédemment.

### Utilisation

La présente invention a également pour objet l'utilisation d'un composé organique (C) décrit précédemment en tant que catalyseur d'hydrosilylation.

### Composition

La présente invention a également pour objet une composition comprenant :
- au moins un composé insaturé (A) comprenant au moins une fonction cétone, ou une fonction aldéhyde,
- moins un composé (B) comprenant au moins une fonction hydrogénosilyle, et
- un catalyseur choisi parmi les composés organiques (C) représentés par la Formule 1.

Cette composition forme le milieu réactionnel dans lequel la réaction d'hydrosilylation selon l'invention peut intervenir. Pour ce faire, cette composition peut être chauffée comme décrit ci-avant.

Selon l'invention, la concentration molaire en catalyseur dans la composition est de 0,5% à 10%, de préférence de 1% à 7,5%, et de façon plus préférée de 1,5% à 5,5% par rapport au nombre de mole de composé (A).

En effet, lors de la réaction d'hydrosilylation, le composé (A) est usuellement en défaut, et la concentration molaire en catalyseur est exprimée par rapport au nombre de moles de composé (A) en défaut. Dans l'hypothèse où, lors de la réaction d'hydrosilylation, le composé (B) comprenant au moins une fonction hydrogénosilyle serait en défaut, la concentration molaire en catalyseur dans la composition serait de 0,5% à 10%, de préférence de 1% à 7,5%, et de façon plus préférée de 1,5% à 5,5% par rapport au nombre de mole de composé (B) en défaut. Outre le composé (A) et le composé (B) comprenant au moins une fonction hydrogénosilyle, la composition de l'invention peut éventuellement comprendre des additifs.

Selon un mode de réalisation de l'invention, l'additif peut être un inhibiteur ou retardateur de la réaction d'hydrosilylation. Ces composés sont connus de l'homme de l'art et sont disponibles commercialement. On peut citer par exemple les composés suivants : les organopolysiloxanes substitués par au moins un alcényle pouvant se présenter éventuellement sous forme cyclique, le tétraméthylvinyl-tétrasiloxane étant particulièrement préféré ; la pyridine ; les phosphines et les phosphites organiques ; les amides insaturés ; les maléates alkylés ; et les alcools acétyléniques.

Les alcools acétyléniques (décrits par exemples dans les documents de brevet FR 1 528 464 et FR 2 372 874), qui font partie des bloqueurs thermiques de réaction d'hydrosilylation préférés, ont pour formule :

(R')(R")C(OH)-C≡CH

formule dans laquelle, R' est un radical alkyle linéaire ou ramifié, ou un radical phényle ; R" est un atome d'hydrogène ou un radical alkyle linéaire ou ramifié, ou un radical phényle ; les radicaux R', R" et l'atome de carbone situé en alpha de la triple liaison pouvant éventuellement former un cycle ; le nombre total d'atomes de carbone contenu dans R' et R" étant d'au moins 5, de préférence de 9 à 20.

Pour lesdits alcools acétyléniques, on peut citer à titre d'exemples :
- l'éthynyl-1-cyclohexanol-1;
- le méthyl-3 dodécyne-1ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-2 butyne-3 ol-2 ;
- le méthyl-3 pentadécyne-1 ol-3 ; et
- le diallylmaléate ou dérivés du diallylmaléate.

Les compositions de l'invention peuvent, en outre, comprendre des additifs fonctionnels usuels. Comme familles d'additifs fonctionnels usuels, on peut citer :
- les charges ;
- les promoteurs d'adhérence ;
- les modulateurs d'adhérence ;
- les additifs de tenue thermique ;
- les additifs pour augmenter la consistance ;
- les pigments ; et
- les additifs de tenue thermique, de tenue aux huiles ou de tenue au feu, par exemple les oxydes métalliques.

Les charges éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 µm (micromètres) et une surface spécifique BET supérieure à 30 m²/g, de préférence comprise entre 30 et 350 m²/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 µm (micromètres) et une surface BET inférieure à 100 m²/g. De façon pratique mais non limitative, les charges employées peuvent être un mélange de quartz et de silice. Les charges peuvent être traitées par tout produit approprié. Sur le plan pondéral, on préfère mettre en oeuvre une quantité de charge comprise entre 1% et 50% en poids, de préférence entre 1% et 40% en poids par rapport à l'ensemble des constituants de la composition.

Plus généralement, sur le plan quantitatif, les compositions selon l'invention peuvent présenter des proportions standards dans le domaine technique considéré, sachant que l'on doit tenir compte également de l'application visée.

D'autres buts, caractéristiques et avantages de l'invention apparaîtront des exemples suivants, qui sont donnés à titre purement illustratif et nullement limitatif.

### Exemples

Toutes les expériences ont été réalisées sous atmosphère d'argon dans la mesure où elles mettent en oeuvre des réactifs sensibles à l'air comme Ge-Cl₄, n-BuLi ou la trichlorophosphine, en utilisant des techniques classiques en boîte à gants et de Schlenk. Des solvants secs, exempts d'oxygène ont été utilisés. Les spectres RMN ¹H, ¹³C, ²⁹Si et ³¹P ont été enregistrés sur des spectromètres Bruker Avance 300 MHz. Les déplacements chimiques des RMN ¹H, ¹³C et ²⁹Si sont indiqués en ppm par rapport au (CH₃)₄Si utilisé comme étalon interne. Les abaissements chimiques de la RMN ³¹P sont exprimés en ppm par rapport à 85% H₃PO₄. Les déplacements chimiques de la RMN ¹¹⁹Sn et les corrélations des spectres de la RMB ¹H ont été obtenus en utilisant des procédures classiques.

### Exemple 1 : Synthèse d'un composé C1 de Formule 1

On a synthétisé le composé **C1**, de formule : 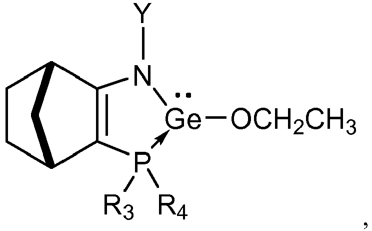 dans laquelle
Y est 2,6-*i*Pr₂-C₆H₃, et
le groupement phosphine est représenté par la formule : 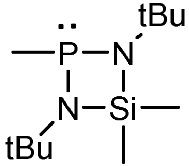 où *t*Bu est le groupe *tert*-butyle
   à partir des composés suivants :

### Synthèse du complexe dichlorure de germanium - dioxane (Ge-Cl₂-dioxane)

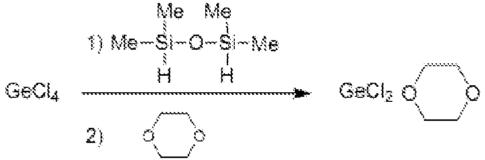

Dans un Schlenk à double col équipé d'un condenseur, on a chargé du tetrachlorogermane (11,4 mL, 98 mmol), de l'éther diéthylique (50 mL) et du tétraméthyldisiloxane (18,7 mL, 106 mmol). La solution a été légèrement chauffée au reflux jusqu'à ce qu'elle devienne claire puis déphase soudainement. Cette réaction a été maintenue encore pendant 2 h pour s'assurer que tous le produit se soit déposé. La phase supérieure incolore a été transférée avec soin dans une fiole conique et désactivée en ajoutant goutte à goutte de l'éthanol. Dans la phase jaune restante, on a ajouté goutte à goutte du 1,4-dioxane (13,7 mL, 160 mmol). Un solide blanc a précipité et a été recueilli par filtration sous atmosphère d'argon, en rinçant le solide avec du pentane. Le solide blanc correspondant au Ge-Cl₂-dioxane est alors séché et stocké dans la boîte à gants (16,8 g, 74%).

### Synthèse du composé 2

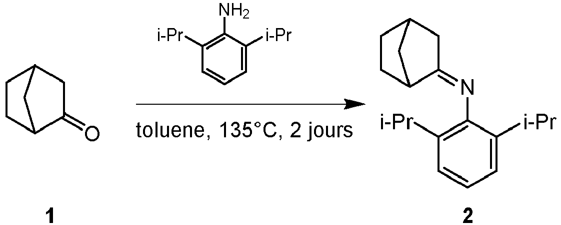

Dans un ballon double col de 500 ml, équipé d'un condenseur et d'un appareil Dean-Stark, on a chargé du Norcamphore **1** (30 g, 0,3 mole), de la diisopropylaniline (57 ml, 0,3 mole), une quantité catalytique d'acide para-toluène sulfonique (0,58 g, 3 mmol), et du toluène (150 ml). Le mélange a été chauffé au reflux 3 jours à 135°C (température de l'huile de bain). Le solvant a été évaporé et l'huile a été reprise dans du pentane et filtrée pour éliminer une petite quantité de précipité. On laisse la solution évaporer lentement pour la cristallisation à température ambiante. Un cristal incolore correspondant au composé **2** a été recueilli 2 jours plus tard (60 g, 74%).

### Analyse RMN du Composé 2

**¹H NMR** (300 MHz, C6D₆, ppm) δ = 1.09 (d, *J*_{HH} = 6.8 Hz, 3H, CH_{3i-Pr}), 1.10 (d, *J*_{HH} = 6.7 Hz, 3H, CH_{3i-Pr}), 1.12 (d, *J*_{HH} = 6.3 Hz, 3H, CH_{3i-Pr}), 1.13 (d, *J*_{HH} = 6.9 Hz, 3H, CH_{3i-Pr}), 1.21-1.89 (m, 8H, CH₂), 2,44 (m, 1H, CH_{tdp}), 2.75 (sept, *J*_{HH} = 6.8 Hz, 1H, CH_{i-Pr}), 2.82 (sept, *J*_{HH} = 6.8 Hz, 1H, CH_{i-Pr}), 2.98 (m, 1H, CH_{tdp}), 7.03 (m, 3H, CHₐᵣ) ;
**¹³C{1H}** (75 MHz, C6D₆, ppm) δ = 22.7 (s, CH_{3i-Pr}), 22.9 (s, CH_{3i-Pr}), 23.4 (s, CH_{3i-Pr}), 23.6 (s, CH_{3i-Pr}), 26.5 (s, CH₂), 27.6 (s, CH₂), 27.7 (s, CH_{i-Pr}), 28.0 (s, CH_{i-Pr}), 35.9 (s, CH_{tdp}), 38.2 (s, CH₂), 38.8 (s, CH₂), 47.0 (s, CH_{tdp}), 123.0 (s, CHₐᵣ), 123.1 (s, CHₐᵣ), 123.4 (s, CHₐᵣ), 135.8 (s, Cₐᵣ), 136.2 (s, Cₐᵣ), 147.0 (s, Cₐᵣ), 179.9 (s, C=N).

### Synthèse du composé 5

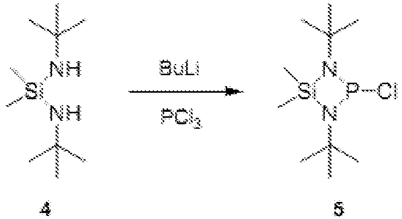

A une solution agitée de Me₂Si(NH^{t}Bu)₂ **4** (7,38 g, 36,46 mmol) dans 40 ml de THF à -78°C, on a ajouté 46,7 mL (74,47 mmol) d'une solution de n-BuLi dans l'hexane (1,6 M). Après l'addition, la solution a été chauffée à 50°C pendant 4 heures. On a ajouté une solution de PCl₃ (3,2 mL, 36,58 mmol) goutte à goutte à -100°C à la solution ci-dessus et on a maintenu la température inférieure à -100°C pendant 2 heures. La solution a été ensuite réchauffée lentement jusqu'à température ambiante pendant une nuit. Le solvant a été évaporé sous vide et repris avec 40 mL de pentane. Le mélange a été filtré et le résidu a été extrait deux fois avec 20 mL de pentane. Le pentane est évaporé sous vide et purifié par distillation sous vide pour donner le composé **5** (7,0 g, 72%) sous forme d'huile incolore.

### Analyse RMN du composé 5

**¹H NMR** (300 MHz, CDCl₃, ppm) δ = 0.45 (s, 6H, SiCH₃), 1.23 (d, *J*_{PH} = 1.3 Hz, 18H, CH_{3t-Bu}); **¹³C NMR{¹H}** (75 MHz, CDCl₃, ppm) δ = 5.2 (d, *J*_{PC} = 3.6 Hz, SiCH₃), 31.9 (d, *J*_{PC} = 7.8 Hz, CH_{3t-Bu}), 52.0 (d, *J*_{PC} = 7.8 Hz, C_{t-Bu});
**³¹P NMR {¹H}** (121 MHz, CDCl₃, ppm) δ = 212.3;
**²⁹Si NMR {¹H}** (59 MHz, CDCl₃, ppm) δ = 27.2.

### Synthèse du composé 8

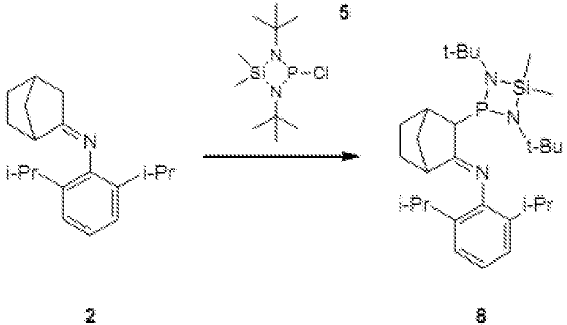

A une solution agitée du composé 2 précédemment préparée (10,0 g, 37,1 mmol) dans 80 ml de THF à -78°C, on a ajouté du nBuLi (1,6 M, 24,3 mL, 39 mmol) et on a ensuite laissé ce mélange réchauffer à température ambiante pendant 1 heure sous agitation. La solution a de nouveau été refroidie à -78°C et on a ajouté le composé **5** précédemment préparée (9,9 g, 37,1 mmol). On a laissé le mélange se réchauffer à température ambiante et le solvant a été évaporé sous vide. Le solide a été lavé avec de l'acétonitrile (3 fois, 80 ml), séché, et dissout avec du pentane puis filtré. Les substances volatiles ont été éliminées pour obtenir le composé **8** (17,4 g, 94%) sous forme d'un solide blanc.

### Analyse RMN du composé 8

**¹H NMR** (300 MHz, C₆D₆, ppm) δ = 0.34 (s, 3H, SiCH₃), 0.42 (s, 3H, SiCH₃), 1.05 (m, 1H, CH₂), 1.20 (m, 1H, CH₂), 1,22 (s, 9H, CH_{3t-Bu}), 1,27 (d, *J*_{HH} = 6.8 Hz, 3H, CH_{3i-Pr}), 1,32 (d, *J*_{HH} = 6.8 Hz, 3H, CH_{3i-Pr}), 1.38 (m, 2H, CH₂), 1,41 (s, 9H, CH_{3t-Bu}), 1.61 (m, 1H, CH₂), 1.75 (m, 1H, CH₂), 2.56 (d, *J*_{HH} = 3,6 Hz,1H, CH_{bridgehead}), 2.62 (d, *J*_{HH} = 3,6 Hz,1H, CH_{bridgehead}), 3.06 (m, 1H, CH), 3.09 (m, 1H, CH_{*i*Pr}), 3.45 (sept., *J*_{HH}= 6.8Hz, 1H, CH_{*i*Pr}), 7.11-7.24 (m, 3H, CH_{Ar});
**¹³C{1H}** (75 MHz, C₆D₆, ppm) δ = 7,2 (s,SiCH₃), 7,5 (d, *J*_{PC} = 1.7 Hz,SiCH₃), 22,3 (s, CH_{3i-Pr}), 23.1 (s, CH_{3i-Pr}), 24.5 (s, CH_{i-Pr}), 24.9 (s, CH_{3i-Pr}), 25.1 (s, CH₂), 27,9 (d, *J*_{PC} = 3.6 CH_{i-Pr}), 28,5 (s, CH_{3i-Pr}), 30.5 (s, CH₂), 32,3 (d, *J*_{PC} = 5.9 Hz, CH_{3t-Bu}) 32.4 (d, *J*_{PC} = 7,4 Hz, CH_{3t-Bu}), 37.3(s, CH₂), 40.2 (s, CH_{bridgehead}), 42,1 (s, CH_{bridgehead}), 51,0 (d, *J*_{PC} = 15,7 Hz, C_{t-Bu}), 51,6 (d, *J*_{PC} = 8.0 Hz, C_{t-Bu}), 66,4 (d, Jpc = 59.8 Hz, PCH), 122,7 (s, CHₐᵣ), 123,2 (s, CHₐᵣ), 123,4 (s, CHₐᵣ), 136,7 (d, *J*_{PC} = 1.3 Hz, Cₐᵣ), 136,8 (d, *J*_{PC} = 0.9 Hz, Cₐᵣ), 148.0 (s, Cₐᵣ), 180.6 (d, *J*_{PC} = 10.3 Hz, C=N);
**³¹PNMR {¹H}** (121 MHz, C₆D₆, ppm) δ = 147.3;
**²⁹Si NMR {¹H}** δ = (59 MHz, C6D₆, ppm) 19,1 (d, *J*_{Psi} = 3,7 Hz).

### Synthèse du composé 11

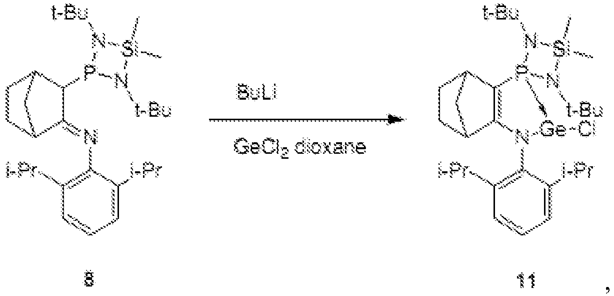

A une solution agitée du composé **8** précédemment préparée (5,0 g, 10 mmol) dans 40 ml de THF refroidie à -78°C, on a ajouté du nBuLi (1,6 M, 6,9 mL, 11 mmol) et on a ensuite laissé ce mélange réchauffer à température ambiante pendant 1 heure sous agitation. La solution a de nouveau été refroidie à -78°C et une solution de complexe de dichlorure de germanium - dioxane précédemment préparé (2,32 g, 10 mmol) dans du THF (10 mL) a été ajoutée. On a laissé le mélange se réchauffer à température ambiante pendant 2 heures et le solvant a été évaporé sous vide. Le solide est repris avec 40 mL de toluène et filtré. Le filtrat a été concentré à siccité et le solide résultant a été lavé deux fois avec du pentane (2 x 20 mL). Les substances volatiles ont été éliminées pour donner le composé **11** (5,7 g, 94%) sous forme d'un solide blanc.

### Analyse RMN du composé 11 :

Isomère majoritaire du composé **11** (64 %)
**¹H-NMR** (300 MHz, C₆D₆, 25 °C) δ = 0.22 (s, 3H, SiCH₃), 0.27 (s, 3H, SiCH₃), 1.17 (s, 9H, CH_{3*t*Bu}), 1.19 (d, *J*_{HH} = 9.1 Hz, 1H, CH₂), 1.24 (d, *J*_{HH} = 6.7 Hz, 3H, CH_{3*i*Pr}), 1.29 (d, *J*_{HH} = 6.7 Hz, 3H, CH_{3*i*Pr}), 1.29 (d, *J*_{HH}= 7.1 Hz, 1H, CH₂), 1.33 (d, *J*_{HH}= 7.1 Hz, 1H, CH₂), 1.38 (d, *J*_{HH}= 6.7 Hz, 3H, CH_{3*i*Pr}), 1.39 (s, 9H, CH_{3*t*Bu}), 1.60 (d, *J*_{HH} = 6.0 Hz, 3H, CH_{3*i*Pr}), 1.64 (m, 2H, CH₂), 1.67 (d, *J*_{HH} = 9.1 Hz, 1H, CH₂), 2.58 (b, 1H, CH_{bridgehead}), 3.05 (b, 1H, CH_{bridgehead}), 3.47 (sept., *J*_{HH} = 6.9 Hz, 1H, CH_{*i*Pr}), 3.68 (sept., *J*_{HH} = 6.9 Hz, 1H, CH_{*i*Pr}), 7.13-7.23 (m, 3H, CH_{Ar});
**¹³C{¹H}-NMR** (75 MHz, C₆D₆, 25 °C) δ = 3.6 (d, *J*_{PC} = 1.3 Hz, SiCH₃), 5.5 (d, *J*_{PC} = 5.0 Hz, SiCH₃), 24.3 (s, CH_{3*i*Pr}), 24.6 (s, CH_{3*i*Pr}), 25.2 (d, *J*_{PC} = 1.3 Hz, CH₂), 25.5 (s, CH_{3*i*Pr}), 26.1 (d, *J*_{PC} = 2.1 Hz, CH_{3*i*Pr}), 27.7 (s, CH_{*i*Pr}), 28.4 (s, CH_{*i*Pr}), 29.0 (d, *J*_{PC} = 1.5 Hz, CH₂), 32.7 (d, *J*_{PC} = 3.0 Hz, CH_{3*t*Bu}), 32.8 (d, *J*_{PC} = 4.2 Hz, CH_{3*t*Bu}), 40.6 (d, *J*_{PC} = 7.0 Hz, CH_{bridgehead}), 43.8 (d, *J*_{PC} = 14 Hz, CH_{bridgehead}), 46.5 (d, *J*_{PC} = 5.2 Hz, CH₂), 51.0 (d, *J*_{PC} = 2.9 Hz, C_{*t*Bu}), 51.5 (d, *J*_{PC} = 3.0 Hz, C_{*t*Bu}), 98.9 (d, *J*_{PC} = 21 Hz, PC), 123.7 (s, CH_{Ar}), 124.2 (s, CH_{Ar}), 126.7 (s, CH_{Ar}), 139.1 (d, *J*_{PC} = 3.9 Hz, C_{Ar}), 145.5 (s, C_{Ar}), 147.5 (s, C_{Ar}), 184.6 (d, *J*_{PC} = 42 Hz, NC);
**³¹P{¹H}-NMR** (121 MHz, C₆D₆, 25 °C) δ = 83.6 (s);
**²⁹Si{¹H}-NMR** (59 MHz, C₆D₆, 25 °C) δ = 11.1 (d, *J*_{PSi} = 4.1 Hz).

Isomère minoritaire du composé **11** (36 %)
**¹H-NMR** (300 MHz, C₆D₆, 25 °C) δ = 0.23 (s, 3H, SiCH₃), 0.27 (s, 3H, SiCH₃), 1.20 (s, 9H, CH_{3*t*Bu}), 1.22 (d, *J*_{HH} = 9.0 Hz, 1H, CH₂), 1.24 (d, *J*_{HH} = 6.6 Hz, 3H, CH_{3*i*Pr}), 1.30 (d, *J*_{HH} = 6.9 Hz, 3H, CH_{3*i*Pr}), 1.34 (d, *J*_{HH} = 6.9 Hz, 1H, CH₂), 1.35 (d, *J*_{HH} = 7.0 Hz, 1H, CH₂), 1.39 (d, *J*_{HH} = 6.9 Hz, 3H, CH_{3*i*Pr}), 1.41 (s, 9H, CH_{3*t*Bu}), 1.61 (d, *J*_{HH} = 6.3 Hz, 3H,CH_{3*i*Pr}), 1.58-1.71 (m, 3H, CH₂), 2.40 (b, 1H, CH_{bridgehead}), 3.05 (b, 1H, CH_{bridgehead}), 3.22 (sept., *J*_{HH} = 6.9 Hz, 1H, CH_{*i*Pr}), 4.00 (sept., *J*_{HH} = 6.9 Hz, 1H, CH_{*i*Pr}), 7.13-7.27 (m, 3H, CH_{Ar});
**¹³C{¹H}-NMR** (75 MHz, C₆D₆, 25 °C) δ = 3.9 (d, *J*_{PC} = 1.3 Hz, SiCH₃), 5.5 (d, *J*_{PC} = 5.0 Hz, SiCH₃), 23.9 (s, CH_{3*i*Pr}), 25.2 (s, CH_{3*i*Pr}), 25.4 (s, CH_{3*i*Pr}), 25.6 (d, *J*_{PC} = 1.3 Hz, CH₂), 26.1 (d, *J*_{PC} = 2.1 Hz, CH_{3*i*Pr}), 27.6 (s, CH_{*i*Pr}), 28.4 (s, CH_{*i*Pr}), 28.6 (d, *J*_{PC} = 1.5 Hz, CH₂), 32.4 (d, *J*_{PC} = 4.0 Hz, CH_{3*t*Bu}), 32.9 (d, *J*_{PC} = 2.9 Hz, CH_{3*t*Bu}), 40.6 (d, *J*_{PC} = 7.0 Hz, CH_{bridgehead}), 43.3 (d, *J*_{PC} = 14 Hz, CH_{bridgehead}), 48.7 (d, *J*_{PC} = 6.0 Hz, CH₂), 51.5 (d, *J*_{PC} = 3.9 Hz, 2C, C_{*t*Bu}), 98.9 (d, *J*_{PC} = 21 Hz, PC), 123.7 (s, CH_{Ar}), 124.4 (s, CH_{Ar}), 126.8 (s, CH_{Ar}), 139.5 (s, C_{Ar}), 145.9 (s, C_{Ar}), 147.8 (s, C_{Ar}), 184.5 (d, *J*_{PC} = 23 Hz, NC);
**³¹P{¹H}-NMR** (121 MHz, C₆D₆, 25 °C) δ = 84.4 (s);
**²⁹Si{¹H}-NMR** (59 MHz, C₆D₆, 25 °C) δ = 11.0 (d, *J*_{PSi} = 4.3 Hz).

### Synthèse du composé C1

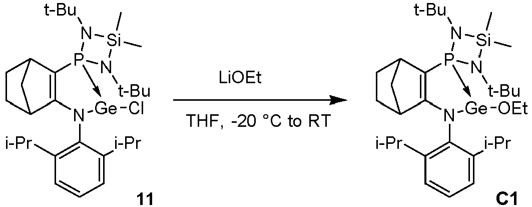

Dans une solution sous agitation de chloro-germylène **11** (1,125 g, 1,85 mmol) et de tétrahydrofurane (THF) (10 mL) refroidie par un bain froid à -60°C, on a ajouté goutte à goutte, une solution fraichement préparée de LiOC₂H₅ (106 mg, 2,0 mmol) dans du THF (5 mL). Le mélange réactionnel a été agité pendant 30 minutes à -60°C. Après avoir enlevé le bain froid, le mélange réactionnel a été conservé à température ambiante pendant 30 minutes supplémentaires. Les substances volatiles ont été éliminées sous vide et le résidu a été extrait avec du pentane (20 mL). Le filtrat a été concentré à environ 3 mL pour réaliser une cristallisation dans un congélateur à -30°C.

Le composé **C1** est obtenu sous forme de cristal blanc par filtration avec un rendement de 88% (1,0 g).

### Analyse RMN du composé C1 :

Isomère majoritaire du composé **C1** (64%)
**¹H-NMR** (300 MHz, C₆D₆, 25°C) δ = 0.29 (s, 3H, Si(CH₃)₂), 0.31 (s, 3H, Si(CH₃)₂), 1.11 (t, ³*J*_{HH} = 6.9 Hz, 3H, CH₃), 1.25 (b, 1H, CH₂), 1.28 (s, 9H, CH_{3*t*Bu}), 1.30 (m, 3H, CH_{3*i*Pr}), 1.34 (s, 9H, CH_{3*t*Bu}), 1.38 (m, 3H, CH_{3*i*Pr}), 1.43 (m, 3H, CH_{3*i*Pr}), 1.46 (b, 2H, CH₂), 1.51 (m, 3H, CH_{3*i*Pr}), 1.68 (b, 1H, CH₂), 2.57 (b, 1H, CH_{bridgehead}), 3.10 (b, 1H, CH_{bridgehead}), 3.70 (m, 1H, CH_{*i*Pr}), 3.84 (m, 1H, CH_{*i*Pr}), 3.85 (m, 2H, CH₂), 7.08-7.26 (m, 3H, CH_{Ar}).
**¹³C{¹H}-NMR** (75 MHz, C₆D₆, 25°C) δ = 4.05 (d, *J*_{PC} = 1.4 Hz Si(CH₃)₂), 5.54 (d, *J*_{PC} = 5.4 Hz, Si(CH₃)₂), 20.10 (s, CH₃), 24.35 (s, CH_{3*i*Pr}), 24.35 (s, CH_{3*i*Pr}), 24.7 (s, CH_{3*i*Pr}), 25.36 (d, *J*_{PC} = 3.5 Hz, CH₂), 26.13 (d, *J*_{PC} = 2.8 Hz, CH_{3*i*Pr}), 27.64 (s, CH_{*i*Pr}), 28.24 (s, CH_{*i*Pr}), 29.14 (d, *J*_{PC} = 1.2 Hz, CH₂), 32.66 (d, *J*_{PC} = 4.6 Hz, CH_{3*t*Bu}), 32.79 (d, *J*_{PC} = 2.7 Hz, CH_{3*t*Bu}), 40.35 (d, *J*_{PC} = 7.7 Hz, CH_{bridgehead}), 43.64 (d, *J*_{PC} = 11.8 Hz, CH_{bridgehead}), 46.09 (d, *J*_{PC} = 3.7 Hz, CH₂), 50.86 (d, *J*_{PC} = 4.4 Hz, C_{*t*Bu}), 50.98 (d, *J*_{PC} = 3.6 Hz, C_{*t*Bu}), 60.80 (d, *J*_{PC} = 4.6 Hz, OCH₂), 97.58 (d, *J*_{PC} = 13.7 Hz, PCCN), 123.43 (s, CH_{Ar}), 123.68 (s, CH_{Ar}), 126.03 (s, CH_{Ar}), 140.32 (d, *J*_{PC} = 2.9 Hz, C_{Ar}), 145.65 (s, C_{Ar}), 147.53 (s, C_{Ar}), 183.19 (d, *J*_{PC} = 36.5 Hz, PCCN).
**³¹P{¹H}-NMR** (121 MHz, C₆D₆, 25°C) δ = 80.18 (s).
**²⁹Si{¹H}-NMR** (60 MHz, C₆D₆, 25°C) δ = 6.74 (d, *J*_{PC} = 4.2 Hz).

Isomère minoritaire du composé **C1** (64%)
**¹H-NMR** (300 MHz, C₆D₆, 25°C) δ = 0.29 (s, 3H, Si(CH₃)₂), 0.31 (s, 3H, Si(CH₃)₂), 1.11 (t, ³*J*_{HH} = 6.9 Hz, 3H, CH₃), 1.25 (b, 1H, CH₂), 1.28 (s, 9H, CH_{3*t*Bu}), 1.30 (m, 3H, CH_{3*i*Pr}), 1.34 (s, 9H, CH_{3*t*Bu}), 1.38 (m, 3H, CH_{3*i*Pr}), 1.43 (m, 3H, CH_{3*i*Pr}), 1.46 (b, 2H, CH₂), 1.51 (m, 3H, CH_{3*i*Pr}), 1.74 (m, 2H, CH₂), 2.45 (b, 1H, CH_{bridgehead}), 3.07 (b, 1H, CH_{bridgehead}), 3.38 (sept., *J*_{HH} = 6.9 Hz, 1H, CH_{*i*Pr}), 3.85 (m, 2H, CH₂), 4.03 (sept., *J*_{HH} = 6.9 Hz, 1H, CH_{*i*Pr}), 7.09-7.26 (m, 3H, CH_{Ar}).
**¹³C{¹H}-NMR** (75 MHz, C₆D₆, 25°C) δ = 4.25 (d, *J*_{PC} = 1.4 Hz Si(CH₃)₂), 5.62 (d, *J*_{PC} = 5.4 Hz, Si(CH₃)₂), 20.16 (s, CH₃), 23.76 (s, CH_{3*i*Pr}), 24.35 (s, CH_{3*i*Pr}), 25.02 (s, CH_{3*i*Pr}), 25.62 (s, CH₂), 26.34 (d, *J*_{PC} = 1.8 Hz, CH_{3*i*Pr}), 27.35 (s, CH_{*i*Pr}), 28.17 (s, CH_{*i*Pr}), 28.90 (d, *J*_{PC} = 1.3 Hz, CH₂), 32.06 (d, *J*_{PC} = 4.7 Hz, CH_{3*t*Bu}), 32.99 (d, *J*_{PC} = 2.9 Hz, CH_{3*t*Bu}), 40.53 (d, *J*_{PC} = 7.6 Hz, CH_{bridgehead}), 43.28 (d, *J*_{PC} = 13.2 Hz, CH_{bridgehead}), 48.28 (d, *J*_{PC} = 5.1 Hz, CH₂), 50.98 (d, *J*_{PC} = 3.6 Hz, C_{*t*Bu}), 51.09 (d, *J*_{PC} = 4.6 Hz, C_{*t*Bu}), 60.80 (d, *J*_{PC} = 4.6 Hz, OCH₂), 99.69 (d, *J*_{PC} = 13.5 Hz, PCCN), 123.54 (s, CH_{Ar}), 123.74 (s, CH_{Ar}), 126.17 (s, CH_{Ar}), 141.02 (d, *J*_{PC} = 2.9 Hz, C_{Ar}), 146.11 (s, C_{Ar}), 147.60 (s, C_{Ar}), 183.07 (d, *J*_{PC} = 38.1 Hz, PCCN).
**³¹P{¹H}-NMR** (121 MHz, C6D₆, 25°C) δ = 81.58 (s).
**²⁹Si{¹H}-NMR** (60 MHz, C₆D₆, 25°C) δ = 6.98 (d, *J*_{PC} = 4.1 Hz).

### Exemple 2 : Synthèse d'un composé C2 de Formule 1

On a synthétisé le composé **C2,** de formule : 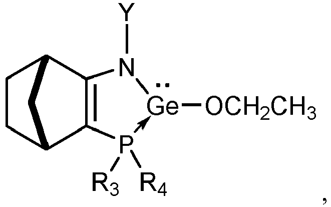 dans laquelle
Y est 2,4,6-triméthyle-C₆H₂, et
le groupement phosphine est représenté par la formule : 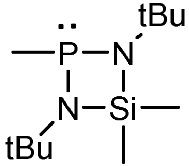 où *t*Bu est le groupe *tert*-butyle.

### Synthèse du complexe dichlorure de germanium - dioxane

Ce composé est préparé selon le protocole décrit dans l'Exemple 1.

### Synthèse du composé 3

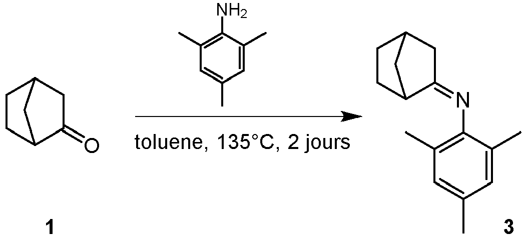

Dans un ballon double col de 250 ml, équipé d'un condenseur et d'un appareil Dean-Stark, on a chargé du Norcamphore **1** (22,3 g, 0,2 mole), de la 2,4,6-Triméthylaniline (28 ml, 0,2 mole), une quantité catalytique d'acide para-toluène sulfonique (0,38 g), et du toluène (100 ml). Le mélange a été chauffé au reflux pendant 4 jours à 135°C (température de l'huile de bain). Le solvant a été évaporé et l'huile a été reprise dans du pentane et filtrée pour éliminer une petite quantité de précipité. La solution a été concentrée à siccité, ce qui donne le composé **3** sous forme d'huile jaune.

### Analyse RMN du composé 3 :

Isomère **3₁** :
**¹H-NMR** (300 MHz, C₆D₆, 25 °C) δ = 1.32-1.39 (m, 1H, CH₂), 1.50-1.56 (m, 2H, CH₂), 1.64-1.68 (m, 1H, CH₂), 1.72-1.80 (m, 3H, CH₂), 1.86-1.92 (m, 1H, CH₂), 2.03 (s, 6H, CH₃), 2.28 (s, 3H, CH₃), 2.51 (m, 1H, CHtdp), 3.05 (m, 1H, CHtdp), 6.85 (br s, 2H, CHAr);
**¹³C{¹H}-NMR** (75 MHz, C₆D₆, 25 °C) δ = 17,4 (s, CH₃), 17.5 (s, CH3), 20.6 (s, CH₃), 26.6 (s, CH₂), 27.5 (s, CH₂), 35.6 (s, CHtdp), 38.3 (s, CH₂), 39.1 (s, CH₂), 46.9 (s, CHtdp), 125.4 (s, CAr), 125.8 (s, CAr), 128.4 (s, CHAr), 128.5 (s, CHAr), 131.6 (s, CAr), 146.1 (s, CAr), 182.2 (s, C=N)

Isomère **3₂** :
**¹H-NMR** (300 MHz, C₆D₆, 25 °C) δ = 1.32-1.39 (m, 1H, CH₂), 1.42-1.46 (m, 2H, CH₂), 1.50-1.56 (m, 1H, CH₂), 1.64-1.68 (m, 1H, CH₂), 1.76-1.78 (m, 1H, CH₂), 2.04 (s, 3H, CH₃), 2.10 (s, 3H, CH₃), 2.19 (m, 1H, CH₂), 2.25 (m, 1H, CH₂), 2.30 (s, 3H, CH₃), 2.51 (m, 1H, CHtdp), 2.61 (m, 1H, CHtdp), 6.86 (br s, 2H, CHAr);
**¹³C{¹H}-NMR** (75 MHz, C₆D₆, 25 °C) δ = 17.9 (s, CH₃), 18.1 (s, CH₃), 20.6 (s, CH₃), 24.9 (s, CH₂), 27.6 (s, CH₂), 35.2 (s, CHtdp), 38.2 (s, CH₂), 41.5 (s, CH₂), 42.0 (s, CHtdp), 125.5 (s, CAr), 126.4 (s, CAr), 128.3 (s, CHAr), 128.3 (s, CHAr), 131.6 (s, CAr), 146.8 (s, CAr), 181.5 (s, C=N).

### Synthèse du composé 5

Ce composé est préparé selon le protocole décrit dans l'Exemple 1.

### Synthèse du composé 9

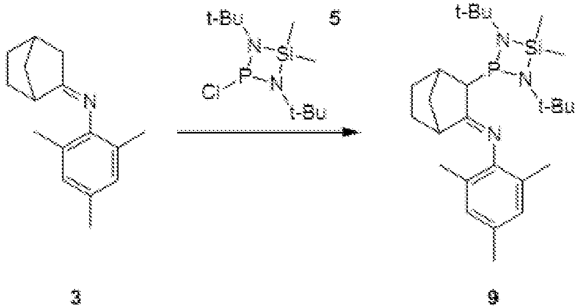

A une solution agitée de composé **3** (11,7 g, 51,46 mmol) dans 70 ml de THF à -78°C, on a ajouté du nBuLi (1,6 M, 34 mL, 54 mmol) et a été ensuite laissé le mélange se réchauffer à température ambiante pendant 1 heure sous agitation. La solution a été refroidie à -78°C et le composé **5** (12,5 g, 46,8 mmol) a été ajoutée. Le mélange a été laissé à réchauffer à température ambiante et le solvant a été évaporé sous vide. Le solide a été lavé avec de l'acétonitrile (3 fois, 80 ml), séché, et dissout avec du pentane puis filtré. Les substances volatiles ont été éliminées pour donner le composé **9** (19,7 g, 92%) sous forme d'un solide blanc.

### Analyse RMN du composé 9:

**¹H-NMR** (300 MHz, C₆D₆, 25 °C) δ = 0.37 (s, 3H, CH₃ₛᵢ), 0.41 (s, 3H, CH₃ₛᵢ), 1.00-1.05 (m, 1H, CH₂), 1.21 (s, 9H, CH_{3t-Bu}), 1.28-1.32 (m, 3H, CH₂), 1.37 (s, 9H, CH_{3t-Bu}), 1.60 (m, 1H, CH₂), 1.72-1.75 (m, 1H, CH₂), 2.21 (s, 9H, CH₃), 2.47 (m, 1H, PCCH_{bridgehead}), 2.57 (d, *J*_{PH} = 3.6 Hz, 1H, PCH), 3,04 (m, 1H, NCCH_{bridgehead}), 6,83 (s, 2H, CH_{Ar});
**¹³C{¹H}-NMR** (75 MHz, C₆D₆, 25 °C) δ = 7.0 (s, CH_{3Si}), 7.2 (d, *J*_{PC} = 2.0 Hz, CH_{3Si}), 20.6 (s, 3C, CH₃), 25.6 (s, CH₂), 30.3 (s, CH₂), 32.2 (d, *J*_{PC} = 6.2 Hz, 3C, CH_{3t-Bu}), 32.3 (d, *J*_{PC} = 7.5 Hz, 3C, CH_{3t-Bu}), 37.0 (s, CH₂), 39.7 (s, NCCH_{bridgehead}), 42.1 (s, PCCH_{bridgehead}) 50.8 (d, *J*_{PC} = 15.8 Hz, C_{t-Bu}), 51.4 (d, *J*_{PC} = 8.3 Hz, C_{t-Bu}), 66.5 (d, *J*_{PC} = 60.1 Hz, PCH), 128.6 (s, 2C, CH_{Ar}), 130.9 (s, 2C, C_{Ar}), 148.3 (s, C_{Ar}), 148.3 (s, C_{Ar}), 180.5 (d, *J*_{PC} = 9.4 Hz, N=C);
**³¹P{¹H}-NMR** (121 MHz, C₆D₆, 25 °C) δ = 146.5;
**²⁹Si{¹H}-NMR** (59 MHz, C₆D₆, 25 °C) δ = 18.6 (d, *J*_{PSi} = 7.2 Hz).

### Synthèse du composé 12

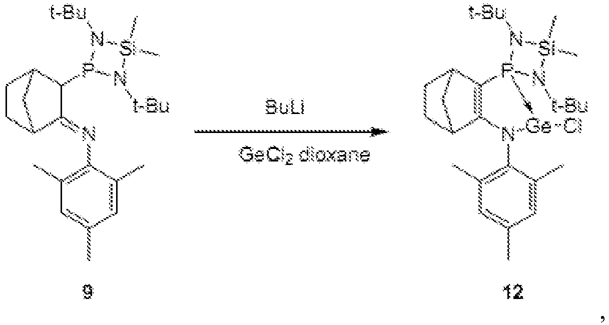

A une solution agitée de composé **9** précédemment préparé (4,5 g, 9,83 mmol) dans 25 ml de THF refroidie à -78°C, on a ajouté du nBuLi (1,6 M, 6,45 mL, 10,32 mmol) et on a ensuite laissé ce mélange réchauffer à température ambiante pendant 1 heure sous agitation. La solution a de nouveau été refroidie à -78°C et une solution de complexe de dichlorure de germanium - dioxane déjà préparé (2,28 g, 9,83 mmol) dans du THF (10 mL) a été ajoutée. On a laissé le mélange se réchauffer à température ambiante pendant 2 heures et le solvant a été évaporé sous vide. Le solide est repris avec 40 mL de toluène et filtré. Le filtrat a été concentré à siccité et le solide résultant a été lavé deux fois avec du pentane (2 x 20 mL). Les substances volatiles ont été éliminées pour donner le composé **12** (3,7 g, 86%) sous forme d'un solide jaunâtre.

### Analyse RMN du composé 12 :

Isomère majoritaire du composé **12** (78%)
**¹H-NMR** (300 MHz, C₆D₆, 25 °C) δ = 0.24 (s, 3H, CH_{3Si}), 0.28 (s, 3H, CH_{3Si}), 1.15 (d, *J*_{PH} = 0.6 Hz, 9H, CH_{3t-Bu}), 1.13-1.2 (m, 2H, CH₂), 1.37 (d, *J*_{PH} = 0.9 Hz, 9H, CH_{3t-Bu}), 1.57-1.71 (m, 3H, CH₂), 2.11 (m, 1H, CH₂), 2.17 (s, 3H, CH₃), 2.42 (s, 3H, CH₃), 2.53 (m, 1H, PCCH_{tdp}), 2.56 (s, 3H, CH₃), 3.02 (m, 1H, NCCH_{tdp}), 6.78-7.14 (s, 2H, CH_{Ar});
**¹³C{¹H}-NMR** (75 MHz, C₆D₆, 25 °C) δ = 4.02 (d, *J*_{PC} = 1.5 Hz, CH_{3Si}), 5.94 (d, *J*_{PC} = 4.8 Hz, CH_{3Si}), 20.09 (s, CH₃), 20.47 (d, *J*_{PC} = 2.5 Hz, CH₃), 21.03 (s, CH₃), 25.75 (s, CH₂), 29.49 (s, CH₂), 33.14 (d, *J*_{PC} = 3.3 Hz, 3C, CH_{3t-Bu}), 33.23 (d, *J*_{PC} = 4.4 Hz, 3C, CH_{3t-Bu}), 40.96 (d, *J*_{PC} = 7.2 Hz, CH_{bridgehead}), 44.32 (d, *J*_{PC} = 14.1 Hz, CH_{bridgehead}), 47.08 (d, *J*_{PC} = 4.2 Hz, CH₂), 51.30 (d, *J*_{PC} = 3.0 Hz, C_{t-Bu}), 51.87 (d, *J*_{PC} = 3.6 Hz, C_{t-Bu}), 99.25 (d, *J*_{PC} = 19.2 Hz, PC), 129.57 (s, CH_{Ar}), 130.05 (s, CH_{Ar}), 134.42 (s, C_{Ar}), 134.80 (s, 2C, C_{Ar}), 136.62 (s, C_{Ar}), 185.17 (d, *J*_{PC} = 42.0 Hz, NC);
**³¹P{¹H}-NMR** (121 MHz, C₆D₆, 25 °C) δ = 83.02;
**²⁹Si{¹H}-NMR** (59 MHz, C₆D₆, 25 °C) δ = 11.44 (d, *J*_{PSi} = 4.1 Hz).

Isomère minoritaire du composé **12** (22%)
**¹H-NMR** (300 MHz, C₆D₆, 25 °C) δ = 0.25 (s, 3H, CH_{3Si}), 0.29 (s, 3H, CH_{3Si}), 1.20-1.25 (m, 2H, CH₂), 1.21 (d, *J*_{PH} = 0.3 Hz, 9H, CH_{3t-Bu}), 1.43 (d, *J*_{PH} = 0.6 Hz, 9H, CH_{3t-Bu}), 1.45-1.60 (m, 3H, CH₂), 2.11 (m, 1H, CH₂), 2.16 (s, 3H, CH₃), 2.29 (s, 3H, CH₃), 2.35 (m, 1H, PCCH_{tdp}), 2.65 (s, 3H, CH₃), 3.02 (m, 1H, NCCH_{tdp}), 6.78-7.14 (m, 2H, CH_{Ar});
**¹³C{¹H}-NMR** (75 MHz, C₆D₆, 25 °C) δ = 4.32 (d, *J*_{PC} = 1.7 Hz, CH_{3Si}), 5.86 (d, *J*_{PC} = 5.3 Hz, CH_{3Si}), 19.80 (d, *J*_{PC} = 1.0 Hz, CH₃), 20.23 (s, CH₃), 21.03 (s, CH₃), 25.67 (s, CH₂), 28.95 (s, CH₂), 32.90 (d, *J*_{PC} = 4.9 Hz, 3C, CH_{3t-Bu}), 33.48 (d, *J*_{PC} = 3.1 Hz, 3C, CH_{3t-Bu}), 40.96 (d, *J*_{PC} = 7.2 Hz, CH_{bridgehead}), 43.82 (d, *J*_{PC} = 14.0 Hz, CH_{bridgehead}), 49.41 (d, *J*_{PC} = 3.1 Hz, CH₂), 51.30 (d, *J*_{PC} = 3.0 Hz, C_{t-Bu}), 51.89 (d, *J*_{PC} = 2.4 Hz, C_{t-Bu}), 101.25 (d, *J*_{PC} = 18.8 Hz, PC), 129.17 (s, CH_{Ar}), 130.20 (s, CH_{Ar}), 135.04 (s, C_{Ar}), 135.18 (s, C_{Ar}), 136.83 (s, C_{Ar}), 140.54 (d, *J*_{PC} = 3.0 C_{Ar}), 184.46 (d, *J*_{PC} = 38.5 Hz, NC);
**³¹P{¹H}-NMR** (121 MHz, C₆D₆, 25 °C) δ = 84.26;
**²⁹Si{¹H}-NMR** (59 MHz, C₆D₆, 25 °C) δ = 11.07 (d, *J*_{PSi} = 4.1 Hz).

### Synthèse du composé C2

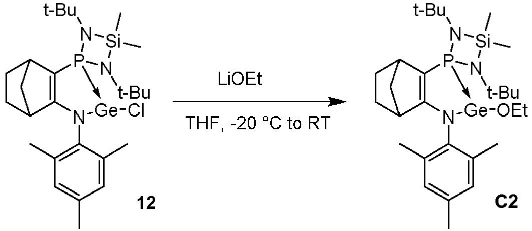

Dans une solution sous agitation de composé **12** précédemment préparé (0,58 g, 1,02 mmol) et de tétrahydrofurane (THF) (10 mL) refroidie par un bain froid à -10°C, on a ajouté goutte à goutte, une solution fraichement préparée de LiOC₂H₅ (56 mg, 1,08 mmol) dans du THF (5 mL). Le mélange réactionnel a été agité pendant 30 minutes à -10°C puis le bain froid a été retiré. Le mélange réactionnel a été laissé à réchauffer à température ambiante pendant 30 minutes supplémentaires. Les substances volatiles ont été éliminées sous vide et le résidu a été extrait avec du pentane (20 mL).

Le filtrat a été concentré à siccité pour obtenir le composé **C2** (0,55g, 94%) sous forme de solide amorphe suffisamment pur.

### Analyse RMN du composé C2 :

Isomère majoritaire du composé **C2** (64%)
**¹H-NMR** (300 MHz, C₆D₆, 25 °C) δ = 0.29 (s, 3H, CH_{3Si}), 0.31 (s, 3H, CH_{3Si}), 1.13 (d, *J*_{PH} = 6.9 Hz, 3H, CH₃), 1.27 (b, 9H, CH_{3t-Bu}), 1.30 (m, 2H, CH₂), 1.40 (b, 9H, CH_{3t-Bu}), 1.60-1.78 (m, 3H, CH₂), 2.19 (s, 3H, CH₃), 2.23 (m, 1H, CH₂), 2.51 (s, 3H, CH₃), 2.54 (m, 1H, PCCH_{tdp}), 2.57 (s, 3H, CH₃), 3.07 (m, 1H, NCCH_{tdp}), 3.76-3.98 (m, 2H, CH₂), 6.92 (s, 1H, CH_{Ar}), 7.16 (s, 1H, CH_{Ar});
**¹³C{¹H}-NMR** (75 MHz, C₆D₆, 25 °C) δ = 4.31 (d, *J*_{PC} = 1.7 Hz, CH_{3Si}), 6.04 (d, *J*_{PC} = 5.0 Hz, CH_{3Si}), 18.84 (s, CH₃), 19.83 (s, CH₃), 20.43 (s, CH₃), 21.09 (s, CH₃), 25.91 (s, CH₂), 29.38 (s, CH₂), 32.95 (d, *J*_{PC} = 4.6 Hz, 3C, CH_{3t-Bu}), 33.13 (d, *J*_{PC} = 3.1 Hz, 3C, CH_{3t-Bu}), 40.89 (d, *J*_{PC} = 7.9 Hz, CH_{bridgehead}), 44.06 (d, *J*_{PC} = 12.7 Hz, CH_{bridgehead}) 46.89 (d, *J*_{PC} = 4.3 Hz, CH₂), 50.18 (d, *J*_{PC} = 12.4 Hz, C_{t-Bu}), 51.18 (d, *J*_{PC} = 3.6 Hz, C_{t-Bu}), 61.61 (d, *J*_{PC} = 14.9 Hz, CH₂), 97.10 (d, *J*_{PC} = 19.3 Hz, PC), 129.29 (s, CH_{Ar}), 129.34 (s, CH_{Ar}), 134.22 (s, C_{Ar}), 134.81 (s, C_{Ar}), 135.12 (s, C_{Ar}), 136.94 (s, C_{Ar}), 184.44 (d, *J*_{PC} = 51.0 Hz, NC);
**³¹P{¹H}-NMR** (121 MHz, C₆D₆, 25 °C) δ = 77.89;
**²⁹Si{¹H}-NMR** (59 MHz, C₆D₆, 25 °C) δ = 6.74 (d, *J*_{PSi} = 4.1 Hz).

Isomère minoritaire du composé **C2** (36%)
**¹H-NMR** (300 MHz, C₆D₆, 25 °C) δ = 0.28 (s, 3H, CH_{3Si}), 0.32 (s, 3H, CH_{3Si}), 1.22 (d, *J*_{PH} = 6.9 Hz, 3H, CH₃), 1.26 (b, 9H, CH_{3t-Bu}), 1.32 (m, 2H, CH₂), 1.43 (s, 9H, CH_{3t-Bu}), 1.45-1.56 (m, 3H, CH₂), 2.16 (m, 1H, CH₂), 2.19 (s, 3H, CH₃), 2.38 (s, 3H, CH₃), 2.44 (b, 1H, PCCH_{tdp}), 2.65 (s, 3H, CH₃), 3.44 (m, 1H, NCCH_{tdp}), 3.76-3.98 (m, 2H, CH₂), 6.75 (s, 1H, CH_{Ar}), 6.84 (s, 1H, CH_{Ar});
**¹³C{¹H}-NMR** (75 MHz, C₆D₆, 25 °C) δ = 4.58 (d, *J*_{PC} = 1.6 Hz, CH_{3Si}), 7.76 (d, *J*_{PC} = 5.4 Hz, CH_{3Si}), 19.72 (s, CH₃), 20.30 (s, CH₃), 20.57 (s, CH₃), 21.01 (s, CH₃), 26.82 (s, CH₂), 29.74 (s, CH₂), 32.55 (d, *J*_{PC} = 5.0 Hz, 3C, CH_{3t-Bu}), 33.49 (d, *J*_{PC} = 3.1 Hz, 3C, CH_{3t-Bu}), 41.05 (d, *J*_{PC} = 7.7 Hz, CH_{bridgehead}), 43.74 (d, *J*_{PC} = 13.1 Hz, CH_{bridgehead}), 48.82 (d, *J*_{PC} = 5.4 Hz, CH₂), 50.58 (d, *J*_{PC} = 11.2 Hz, C_{t-Bu}), 51.46 (d, *J*_{PC} = 4.0 Hz, C_{t-Bu}), 61.41 (d, *J*_{PC} = 14.2 Hz, CH₂), 99.16 (d, *J*_{PC} = 13.3 Hz, PC), 129.29 (s, CH_{Ar}), 129.43 (s, CH_{Ar}), 134.44 (s, C_{Ar}), 135.35 (s, C_{Ar}), 136.13 (s, C_{Ar}), 137.05 (s, C_{Ar}), 183.05 (d, *J*_{PC} = 48.1 Hz, NC);
**³¹P{¹H}-NMR** (121 MHz, C₆D₆, 25 °C) δ = 80.43;
**²⁹Si{¹H}-NMR** (59 MHz, C₆D₆, 25 °C) δ = 6.98 (d, *J*_{PSi} = 4.0 Hz).

### Exemple 3 : Synthèse d'un composé C3 de Formule 1

On a synthétisé le composé C3, de formule : 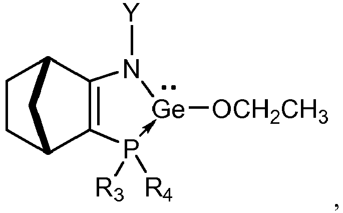 dans laquelle
Y est 2,6-*i*Pr₂-C₆H₃, et
le groupement phosphine est représenté par la formule :

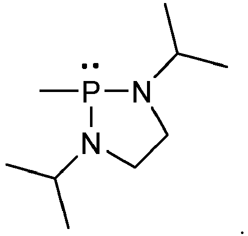

### Synthèse du complexe dichlorure de germanium - dioxane

Ce composé est préparé selon le protocole décrit dans l'Exemple 1.

### Synthèse du composé 2

Ce composé est préparé selon le protocole décrit dans l'Exemple 1.

### Synthèse du composé 7

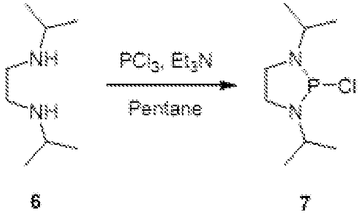

A une solution agitée de composé **6** (14,4 g, 0,10 mole) et de triéthylamine (70 ml, 0,50 mole) dans 60 ml de pentane refroidi à 0°C, on a ajouté goutte à goutte PCl₃ (8,75 mL, 0,10 mol). Le mélange a ensuite été agité pendant une nuit (20 h) à température ambiante. La solution est filtrée et le gâteau de filtre a été lavé deux fois avec 100 ml de pentane. Les filtrats combinés ont été concentrés, et le résidu obtenu a été distillé sous vide pour donner le composé 7 (12,3 g, 60%) sous forme d'huile incolore.

### Analyse RMN du composé 7 :

**¹H-NMR** (300 MHz, C₆D₆, 25 °C) δ = 0.90 (d, *J*_{HH} = 3.4 Hz, 12H, CH₃), 2,87 (b, 2H, CH), 2.97 (m, 4H, CH₂);
**¹³C{¹H}-NMR** (75 MHz, C₆D₆, 25 °C) δ = 21,4 (s, CH₃), 22,0 (s, CH₃), 46,7 (d, *J*_{PC} = 10.4 Hz, CH₂), 48.0 (d, *J*_{PC} = 14.9 Hz, CH);
**³¹P{¹H}-NMR** (75 MHz, C₆D₆, 25 °C) δ = 160.8.

### Synthèse du composé 10

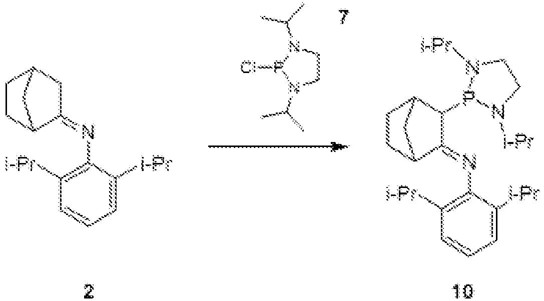

A une solution agitée de composé **2** précédemment préparé (16,03 g, 59,5 mmol) dans 70 ml de THF à -78°C, on a ajouté du nBuLi (1,6 M, 39 mL, 62,5 mmol) et on a ensuite laissé ce mélange réchauffer à température ambiante pendant 1 heure sous agitation. La solution a de nouveau été refroidie à -78°C et on a ajouté le composé7 précédemment préparé (12,3 g, 59,5 mmol). On a laissé le mélange se réchauffer à température ambiante pendant 2 heures et le solvant a été évaporé sous vide. Le solide a été lavé avec de l'acétonitrile (3 fois, 80 ml), séché, et dissout avec du pentane puis filtré. Les substances volatiles ont été éliminées pour obtenir le produit **10** (20,2 g, 76%) sous forme d'un solide blanc.

### Analyse RMN du Composé 10

**¹H-NMR** (300 MHz, C₆D₆, 25 °C) δ = 1.03 (d, *J*_{HH} = 2.1 Hz, 3H, CH_{3i-Pr}), 1.06 (b, 9H, CH_{3i-Pr}), 1.11 (b, 9H, CH_{3i-Pr}), 1.15 (d, *J*_{HH} = 1.8 Hz, 3H, CH_{3i-Pr}), 1.22 (m, 2H, CH₂), 1.32 (m, 2H, CH₂), 1.68 (m, 2H, CH₂), 2.16 (d, *J*_{HH} = 3.6 Hz, 1H, PCH), 2.46 (d, *J*_{HH} = 9.6 Hz, 1H, CH_{bridgehead}), 2.56 (m, 1H, CH_{bridgehead}), 2.79 (sept, *J*_{HH} = 9.6 Hz, 1H, CH_{i-Pr}), 2.91 (m, 1H, CH_{i-Pr}), 3.02 (m, 3H, NCH₂, CH_{i-Pr}), 3.20 (m, 2H, NCH₂), 3.41 (m, 1H, CH_{i-Pr}), 6.90-7.05 (m, 3H, CH_{Ar});
**¹³C{¹H}-NMR** (75 MHz, C₆D₆, 25 °C) δ = 22.0 (d, *J*_{PC} = 6.7 Hz, CH_{3i-Pr}), 22.2 (d, *J*_{PC} = 6.5 Hz, CH_{3i-Pr}), 22.2 (s, CH_{3i-Pr}), 22.4 (d, *J*_{PC} = 7.3 Hz, CH_{3i-Pr}), 22.8 (d, *J*_{PC} = 13.8 Hz, CH_{3i-Pr}), 23.0 (s, CH_{3i-Pr}), 24.3 (s, CH_{3i-Pr}), 24.7 (s, CH_{3i-Pr}), 25.2 (d, *J*_{PC} = 1.5 Hz, CH₂), 27.5 (d, *J*_{PC} = 3.4 Hz, CH_{i-Pr}), 28.3 (s, CH_{i-Pr}), 29.2 (d, *J*_{PC} = 1.2 Hz, CH₂), 35.9 (d, *J*_{PC} = 4.2 Hz, CH₂), 39.4 (d, *J*_{PC} = 4.7 Hz, CH_{i-Pr}), 42.2 (s, CH_{i-Pr}), 45.6 (d, *J*_{PC} = 8.8 Hz, CH₂), 48.2 (d, *J*_{PC} = 7.2 Hz, CH₂), 49.0 (d, *J*_{PC} = 20.7 Hz, CH_{bridgehead}), 52.2 (d, *J*_{PC} = 26.0 Hz, CH_{bridgehead}), 55.6 (d, *J*_{PC} = 42.1 Hz, PCH), 122.6 (s, CH_{Ar}), 123.1 (s, CH_{Ar}), 123.2 (s, CH_{Ar}), 136.2 (d, *J*_{PC} = 1.7 Hz, C_{Ar}), 136.8 (d, *J*_{PC} = 1.3 Hz, C_{Ar}), 147.9 (d, *J*_{PC} = 1.4 Hz, C_{Ar}), 180.4 (d, *J*_{PC} = 8.0 Hz, N=C);
**³¹P{¹H}-NMR** (121 MHz, C₆D₆, 25 °C) δ = 104.7.

### Synthèse du composé 13

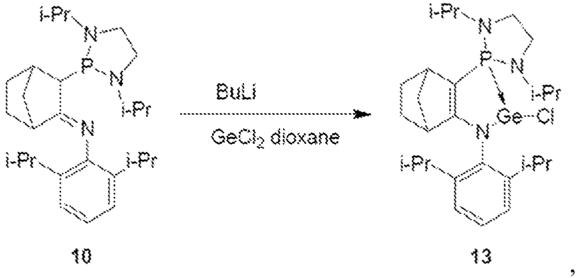

A une solution agitée de composé **10** précédemment préparé (3,0 g, 6,79 mmol) dans 20 ml de THF refroidie à -78°C, on a ajouté du nBuLi (1,6 M, 4,4 mL, 7,1 mmol) et on a ensuite laissé ce mélange réchauffer à température ambiante pendant 1 heure sous agitation. La solution a de nouveau été refroidie à -78°C et une solution de *complexe dichlorure de germanium* - *dioxane* (1,6 g, 6,8 mmol) dans du THF (10 mL) a été ajoutée. On a laissé le mélange se réchauffer à température ambiante pendant 2 heures et le solvant a été évaporé sous vide. Le solide est repris avec 40 mL de toluène et filtré. Le filtrat a été concentré à siccité et le solide résultant a été lavé deux fois avec du pentane (2 x 20 mL). Les substances volatiles ont été éliminées pour donner le composé **13** (3,7 g, 86%) sous forme d'un solide jaunâtre.

### Analyse RMN du composé 13 :

Isomère minoritaire du composé **13** (45%)
**¹H-NMR** (300 MHz, C₆D₆, 25 °C) δ = 0.91 (d, *J*_{HH} = 6.8 Hz, 3H, CH_{3i-Pr}), 0.93 (d, *J*_{HH} = 6.1 Hz, 3H, CH_{3i-Pr}), 1.01 (d, *J*_{HH} = 7.0 Hz, 3H, CH_{3i-Pr}), 1.19 (d, *J*_{HH} = 7.1 Hz, 3H, CH_{3i-Pr}), 1.20 (m, 1H, CH₂), 1.26 (d, *J*_{HH} = 7.4 Hz, 3H, CH_{3i-Pr}), 1.27 (d, *J*_{HH} = 7.1 Hz, 3H, CH_{3i-Pr}), 1.29 (d, *J*_{HH} = 5.8 Hz, 3H, CH_{3i-Pr}), 1.35 (b, 1H, CH₂), 1.50 (b, 2H, CH₂), 1.53(d, *J*_{HH} = 6.1 Hz, 3H, CH_{3i-Pr}), 1.68 (b, 1H, CH₂), 1.73 (b, 1H, CH₂), 2.32 (b, 1H, PCCH_{tdp}), 2.42-2.70 (m, 4H, NCH₂), 2.73 (b, 1H, NCCH_{tdp}), 3.14 (sept, *J*_{HH} = 6.9 Hz, 1H, CH_{i-Pr}), 3.24 (m, 1H, CH_{i-Pr}), 3.70 (sept, *J*_{HH} = 6.8 Hz, 1H, CH_{i-Pr}), 4.05 (m, 1H, CH_{i-Pr}), 7.07-7.22 (m, 3H, CH_{Ar});
**¹³C{¹H}-NMR** (75 MHz, C₆D₆, 25 °C) δ = 20.3 (d, *J*_{PC} = 2.1 Hz, CH_{3i-Pr}), 20.7 (s, CH_{3i-Pr}), 21.1 (d, *J*_{PC} = 5.4 Hz, CH_{3i-Pr}), 22.2 (d, *J*_{PC} = 4.3 Hz, CH_{3i-Pr}), 24.0 (s, CH_{3i-Pr}), 24.6 (s, CH_{3i-Pr}), 25.5 (s, CH₂), 25.9 (s, CH_{3i-Pr}), 26.2 (s, CH_{3i-Pr}), 27.8 (s, CH_{i-Pr}), 28.8 (s, CH_{i-Pr}), 29.6 (d, *J*_{PC} = 0.8 Hz, CH₂), 38.7 (s, CH₂), 39.3 (d, *J*_{PC} = 1.9 Hz, CH₂), 40.5 (d, *J*_{PC} = 8.0 Hz, CH_{tdp}), 43.4 (d, *J*_{PC} = 14.2 Hz, CH_{tdp}), 44.4 (d, *J*_{PC} = 9.7 Hz, CH_{i-Pr}), 45.0 (d, *J*_{PC} = 1.75 Hz, CH_{i-Pr}), 48.8 (d, *J*_{PC} = 3.1 Hz, CH₂), 91.8 (d, *J*_{PC} = 21.6 Hz, PC), 123.8 (s, CH_{Ar}), 124.5 (s, CH_{Ar}), 126.6 (s, CH_{Ar}), 140.3 (d, *J*_{PC} = 5.7 Hz, C_{Ar}), 146.3 (s, C_{Ar}), 147.6 (s, C_{Ar}), 191.1 (d, *J*_{PC} = 42.4 Hz, NC);
**³¹P{¹H}-NMR** (121 MHz, C₆D₆, 25 °C) δ = 71.3.

Isomère majoritaire du composé 13 (55%)
**¹H-NMR** (300 MHz, C₆D₆, 25 °C) δ = 0.98 (d, *J*_{HH} = 6.5 Hz, 3H, CH_{3i-Pr}), 1.00 (d, *J*_{HH} = 7.1 Hz, 3H, CH_{3i-Pr}), 1.04 (d, *J*_{HH} = 7.1 Hz, 3H, CH_{3i-Pr}), 1.18 (m, 1H, CH₂), 1.21 (d, *J*_{HH} = 6.8 Hz, 3H, CH_{3i-Pr}), 1.24 (d, *J*_{HH} = 7.1 Hz, 3H, CH_{3i-Pr}), 1.31 (d, *J*_{HH} = 6.5 Hz, 3H, CH_{3i-Pr}), 1.34 (d, *J*_{HH} = 7.1 Hz, 3H, CH_{3i-Pr}), 1.38 (b, 1H, CH₂), 1.40 (b, 1H, CH₂), 1.50 (d, *J*_{HH} = 6.7 Hz, 3H, CH_{3i-Pr}), 1.52 (b, 1H, CH₂), 1.62 (b, 1H, CH₂), 1.68 (b, 1H, CH₂), 2.42-2.70 (m, 4H, CH₂), 2.60 (b, 1H, PCCH_{tdp}), 2.88 (b, 1H, NCCH_{tdp}), 3.26 (sept, *J*_{HH} = 6.7 Hz, 1H, CH_{i-Pr}), 3.47 (m, 1H, CH_{i-Pr}), 3.99 (sept, *J*_{HH} = 6.9 Hz, 1H, CH_{i-Pr}), 4.21 (m, 1H, CH_{*i*-Pr}), 7.07-7.22 (m, 3H, CH_{Ar});
**¹³C{¹H}-NMR** (75 MHz, C₆D₆, 25 °C) δ = 20.4 (d, *J*_{PC} = 0.7 Hz, CH_{3i-Pr}), 21.0 (d, *J*_{PC} = 2.3 Hz, CH_{3i-Pr}), 21.3 (d, *J*_{PC} = 5.6 Hz, CH_{3i-Pr}), 22.0 (d, *J*_{PC} = 6.9 Hz, CH_{3i-Pr}), 24.2 (s, CH_{3i-Pr}), 24.4 (s, CH_{3i-Pr}), 25.4 (s, CH_{3i-Pr}),25.5 (s, CH₂), 26.1 (d, *J*_{PC} = 2.0 Hz, CH_{3i-Pr}), 27.9 (s, CH_{i-Pr}), 28.7 (s, CH_{i-Pr}), 29.6 (d, *J*_{PC} = 1.2 Hz, CH₂), 38.7 (s, CH₂), 39.4 (d, *J*_{PC} = 2.8 Hz, CH₂), 40.9 (d, *J*_{PC} = 8.5 Hz, CH_{tdp}), 44.2 (d, *J*_{PC} = 13.4 Hz, CH_{tdp}), 44.8 (d, *J*_{PC} = 3.4 Hz, CH_{i-Pr}), 45.2 (d, *J*_{PC} = 9.0 Hz, CH_{i-Pr}), 46.8 (d, *J*_{PC} = 4.7 Hz, CH₂), 89.7 (d, *J*_{PC} = 25.2 Hz, PC), 123.3 (s, CH_{Ar}), 124.3 (s, CH_{Ar}), 126.6 (s, CH_{Ar}), 139.5 (d, *J*_{PC} = 4.1 Hz, C_{Ar}), 145.5 (s, C_{Ar}), 147.6 (s, C_{Ar}), 190.5 (d, *J*_{PC} = 41.1 Hz, NC);
**³¹P{¹H}-NMR** (121 MHz, C₆D₆, 25 °C) δ = 65.2.

### Synthèse du composé C3

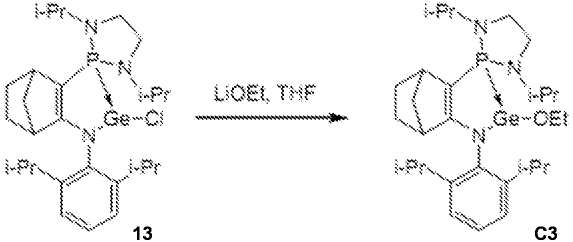

Dans une solution sous agitation de composé 13 précédemment préparé (2,0 g, 3,64 mmol) et de THF (10 mL) refroidie par un bain froid à -10°C, on a ajouté goutte à goutte, une solution fraichement préparée de LiOC₂H₅ (227 mg, 4,37 mmol) dans du THF (5 mL). Le mélange réactionnel a été agité pendant 30 minutes à -10°C puis le bain froid a été retiré. Le mélange réactionnel a été laissé à réchauffer à température ambiante pendant 30 minutes supplémentaires. Les substances volatiles ont été éliminées sous vide et le résidu a été extrait avec du pentane (20 mL).

Le filtrat a été concentré à environ 5 ml et stocké au congélateur à -30°C pour la cristallisation. Après filtration, on obtient 1,3 g de composé C3 (rendement de 64%) sous la forme de cristaux blancs.

### Analyse RMN du composé C3 :

Isomère majoritaire du composé C3 (72%)
**¹H-NMR** (300 MHz, C₆D₆, 25 °C) δ = 0.94 (d, *J*_{HH} = 6.6 Hz, 3H, CH_{3i-Pr}), 1.05-1.13 (m, 9H, CH_{3i-Pr}), 1.19-1.29 (m, 2H, CH₂), 1.22-1.31 (m, 9H, CH_{3i-Pr}), 1.34-1.43 (m, 1H, CH₂), 1.40-1.48 (m, 9H, CH₃, CH_{3i-Pr}), 1.60-1.76 (m, 3H, CH₂), 2.56 (b, 1H, CH_{bridgehead}), 2.58-2.76 (m, 4H, NCH₂), 2.93 (b, 1H, CH_{bridgehead}), 3.41-4.04 (m, 6H, OCH₂, CH_{i-Pr}), 7.11-7.24 (m, 3H, CH_{Ar}); **¹³C{¹H}-NMR** (75 MHz, C₆D₆, 25 °C) δ = 20.45 (s, CH_{3i-Pr}), 21.20 (d, *J*_{PC} = 3.7 Hz, CH_{3i-Pr}), 21.30 (d, *J*_{PC} = 5.8 Hz, CH_{3i-Pr}), 21.99 (d, *J*_{PC} = 5.5 Hz, CH_{3i-Pr}), 24.69 (s, CH_{3i-Pr}), 24.79 (s, CH₃, _{Pr}), 25.06 (s, CH_{3i-Pr}), 25.92 (s, CH₂), 26.32 (s, CH_{3i-Pr}), 28.26 (s, 2C, CH₃, CH_{i-Pr}), 28.75 (s, CH_{i-Pr}), 30.35 (d, *J*_{PC} = 1.8 Hz, CH₂), 40.50 (d, *J*_{PC} = 2.1 Hz, CH₂), 40.64 (s, CH₂), 41.23 (d, *J*_{PC} = 8.9 Hz, CH_{bridgehead}), 44.18 (d, *J*_{PC} = 11.2 Hz, CH_{tdp}), 45.18 (d, *J*_{PC} = 7.3 Hz, CH_{i-Pr}), 45.45 (d, *J*_{PC} = 10.0 Hz, CH_{i-Pr}), 46.56 (d, *J*_{PC} = 3.4 Hz, CH₂), 62.02 (d, *J*_{PC} = 13.6 Hz, CH₂), 91.18 (d, *J*_{PC} = 19.1 Hz, PC), 123.89 (s, CH_{Ar}), 124.04 (s, CH_{Ar}), 126.34 (s, CH_{Ar}), 145.98 (s, C_{Ar}), 148.13 (s, 2C, C_{Ar}), 187.75 (d, *J*_{PC} = 39.3 Hz, NC);
**³¹P{¹H}-NMR** (121 MHz, C₆D₆, 25 °C) δ = 69.41.

Isomère minoritaire du composé C3 (28%)
**¹H-NMR** (300 MHz, C₆D₆, 25 °C) δ = 1.04 (d, *J*_{HH} = 6.6 Hz, 3H, CH_{3i-Pr}), 1.03-1.16 (m, 9H, CH_{3i-Pr}), 1.19-1.29 (m, 2H, CH₂), 1.19-1.29 (m, 9H, CH_{3i-Pr}), 1.34-1.43 (m, 1H, CH₂), 1.34-1.44 (m, 9H, CH_{3i-Pr}), 1.60-1.76 (m, 3H, CH₂), 2.41 (b, 1H, CH_{bridgehead}), 2.58-2.76 (m, 4H, CH₂), 2.86 (b, 1H, CH_{bridgehead}), 3.30 (sept, *J*_{HH} = 1.7 Hz, 1H, CH_{i-Pr}), 3.41-4.04 (m, 5H, OCH₂, CH_{i-Pr}), 7.11-7.24 (m, 3H, CH_{Ar});
**¹³C{¹H}-NMR** (75 MHz, C₆D₆, 25 °C) δ = 20.65 (s, CH_{3i-Pr}), 21.73 (d, *J*_{PC} = 3.9 Hz, CH_{3i-Pr}), 21.80 (d, *J*_{PC} = 1.9 Hz, CH_{3i-Pr}), 22.17 (d, *J*_{PC} = 4.0 Hz, CH_{3i-Pr}), 24.19 (s, CH_{3i-Pr}), 25.34 (s, CH_{3i-Pr}), 25.43 (s, CH_{3i-Pr}), 26.29 (s, CH_{3i-Pr}), 26.40 (s, CH₂), 27.77 (s, 2C, CH₃, CH_{i-Pr}), 28.80 (s, CH_{i-Pr}), 30.10 (d, *J*_{PC} = 1.8 Hz, CH₂), 40.24 (d, *J*_{PC} = 1.7 Hz, CH₂), 41.43 (s, CH₂), 41.44 (d, *J*_{PC} = 4.6 Hz, CH_{bridgehead}), 43.84 (d, *J*_{PC} = 13.2 Hz, CH_{bridgehead}), 45.34 (d, *J*_{PC} = 6.9 Hz, CH_{i-Pr}), 45.78 (d, *J*_{PC} = 11.5 Hz, CH_{i-Pr}), 48.72 (d, *J*_{PC} = 3.4 Hz, CH₂), 62.17 (d, *J*_{PC} = 10.7 Hz, CH₂), 92.93 (d, *J*_{PC} = 16.5 Hz, PC), 123.83 (s, CH_{Ar}), 124.27 (s, CH_{Ar}), 126.49 (s, CH_{Ar}), 140.95 (d, *J*_{PC} = 2.7 Hz, C_{Ar}), 146.90 (s, C_{Ar}), 147.75 (s, C_{Ar}), 188.86 (d, *J*_{PC} = 40.6 Hz, NC);
**³¹P{¹H}-NMR** (121 MHz, C₆D₆, 25 °C) δ = 62.51.

### Exemple 4 : Etude de l'activité catalytique des composés C1, C2 et C3 sur la réaction d'hydrosilylation du trifluoroacétophènone par le phénylsilane

Le composé **C1** (34 mg, 0,055 mmol), 0,4 mL de benzène deutéré (C₆D₆) et du phénylsilane (7,5 µL, 0,06 mmol) ont été mélangés, puis 20 équivalents de trifluoroacétophènone et de phénylsilane ont respectivement été ajoutés. Dans la composition, la concentration molaire en composé **C1** est de 5% par rapport au trifluoroacétophènone. Le tube a ensuite été chauffé à 120°C, et après 3 heures, les analyses par RMN du ³¹P et du ¹⁹F ont permis de vérifier que la réaction d'hydrosilylation du trifluoroacétophènone par le phénylsilane était complète, avec une conversion de 100%.

Le composé **C2** (31,6 mg, 0,055 mmol), 0,3 mL de benzène deutéré (C₆D₆) et du phénylsilane (7,5 µL, 0,06 mmol) ont été mélangés puis 40 équivalents de trifluoroacétophènone et de phénylsilane ont respectivement été ajoutés. Dans la composition, la concentration molaire en composé C2 est de 2,5% par rapport au trifluoroacétophènone. Le tube a ensuite été chauffé à 80°C, et après 9 heures, les analyses par RMN du ³¹P et du ¹⁹F ont permis de vérifier que la réaction d'hydrosilylation du trifluoroacétophènone par le phénylsilane était complète, avec une conversion de 100%.

Le composé **C3** (32 mg, 0,055 mmol), 0,3 mL de benzène deutéré (C₆D₆) et du phénylsilane (7,5 µL, 0,06 mmol) ont été mélangés, puis 40 équivalents de trifluoroacétophènone et de phénylsilane ont respectivement été ajoutés à température ambiante. Dans la composition, la concentration molaire en composé **C3** est de 2,5% par rapport au trifluoroacétophènone. Après 3 heures à température ambiante, les analyses par RMN du ³¹P et du ¹⁹F ont permis de vérifier que la réaction d'hydrosilylation du trifluoroacétophènone par le phénylsilane était complète, avec une conversion de 100%.

### Exemple 5 : Etude de l'activité catalytique des composés C2 et C3 sur la réaction d'hydrosilylation de diéthylcétone par le phénylsilane

Le composé C2 (31,6 mg, 0,055 mmol), 0,3 mL de benzène deutéré (C₆D₆) et du phénylsilane (7,5 µL, 0,06 mmol) ont été mélangés, puis 40 équivalents de diéthylcétone et de phénylsilane ont respectivement été ajoutés. Dans la composition, la concentration molaire en composé **C2** est de 2,5% par rapport au diéthylcétone. Le tube a ensuite été chauffé à 80°C, et après 3 heures, les analyses par RMN du ³¹P et du ¹⁹F ont permis de vérifier que la réaction d'hydrosilylation était complète, avec une conversion de 100%.

Le composé **C3** (32 mg, 0,055 mmol), 0,3 mL de benzène deutéré (C₆D₆) et du phénylsilane (7,5 µL, 0,06 mmol) ont été mélangés, puis 40 équivalents de diéthylcétone et de phénylsilane ont respectivement été ajoutés. Dans la composition, la concentration molaire en composé **C3** est de 2,5% par rapport au diéthylcétone. Le tube a ensuite été chauffé à 120°C, et après 2 heures, les analyses par RMN du ³¹P et du ¹⁹F ont permis de vérifier que la réaction d'hydrosilylation était complète, avec une conversion de 100%.

### Exemple 6 : Etude de l'activité catalytique des composés C1 et C3 sur la réaction d'hydrosilylation du 4-fluorobenzaldéhyde par le phénylsilane

Le composé **C1** (34 mg, 0,055 mmol), 0,4 mL de benzène deutéré (C₆D₆) et du phénylsilane (7,5 µL, 0,06 mmol) ont été mélangés, puis 20 équivalents de 4-fluorobenzaldéhyde et de phénylsilane ont respectivement été ajoutés. Dans la composition, la concentration molaire en composé **C1** est de 5% par rapport au 4-fluorobenzaldéhyde. Le tube a ensuite été chauffé à 120°C, et après 6 heures, les analyses par RMN du ³¹P et du ¹⁹F ont permis de vérifier que la réaction d'hydrosilylation était complète, avec une conversion de 100%.

Le composé **C3** (32 mg, 0,055 mmol), 0,3 mL de benzène deutéré (C₆D₆) et du phénylsilane (7,5 µL, 0,06 mmol) ont été mélangés, puis 40 équivalents de 4-fluorobenzaldéhyde et de phénylsilane ont respectivement été ajoutés. Dans la composition, la concentration molaire en composé **C3** est de 2,5% par rapport au 4-fluorobenzaldéhyde. Le tube a ensuite été chauffé à 80°C. Après 3 jours, la réaction est arrêtée et les analyses par RMN du ³¹P et du ¹⁹F ont permis de vérifier que la réaction d'hydrosilylation a eu lieu, avec une conversion de 71%.

### Exemple 7 : Etude de l'activité catalytique des composés C1, C2 et C3 sur la réaction d'hydrosilylation de l'hexanal par le phénylsilane

Le composé **C1** (34 mg, 0,055 mmol), 0,4 mL de benzène deutéré (C₆D₆) et du phénylsilane (7,5 µL, 0,06 mmol) ont été mélangés, puis 20 équivalents d'hexanal et de phénylsilane ont respectivement été ajoutés. Dans la composition, la concentration molaire en composé **C1** est de 5% par rapport à l'hexanal. Le tube a ensuite été chauffé à 80°C, et après 15 heures, les analyses par RMN du ³¹P et du ¹⁹F ont permis de vérifier que la réaction d'hydrosilylation était complète, avec une conversion de 100%.

Le composé **C2** (31,6 mg, 0,055 mmol), 0,3 mL de benzène deutéré (C₆D₆) et du phénylsilane (7,5 µL, 0,06 mmol) ont été mélangés, puis 40 équivalents d'hexanal et de phénylsilane ont respectivement été ajoutés. Dans la composition, la concentration molaire en composé **C2** est de 2,5% par rapport à l'hexanal. Le tube a ensuite été chauffé à 80°C. Après 3 jours, les analyses par RMN du ³¹P et du ¹⁹F ont permis de vérifier que la réaction d'hydrosilylation était complète, avec une conversion de 100%.

Le composé **C3** (32 mg, 0,055 mmol), 0,3 mL de benzène deutéré (C₆D₆) et du phénylsilane (7,5 µL, 0,06 mmol) ont été mélangés, puis 40 équivalents d'hexanal et de phénylsilane ont respectivement été ajoutés. Dans la composition, la concentration molaire en composé **C3** est de 2,5% par rapport à l'hexanal. Le tube a ensuite été chauffé à 80°C. Après 3 jours, on a arrêté la réaction et les analyses par RMN du ³¹P et du ¹⁹F ont permis de vérifier que la réaction d'hydrosilylation a eu lieu, avec une conversion de 95%.

## Revendications

1. Procédé d'hydrosilylation d'un composé insaturé (A) comprenant au moins une fonction cétone ou une fonction aldéhyde, avec un composé (B) comprenant au moins une fonction hydrogénosilyle,
ledit procédé étant **caractérisé par le fait qu'**il est catalysé par un composé organique (C) représenté par la Formule 1: 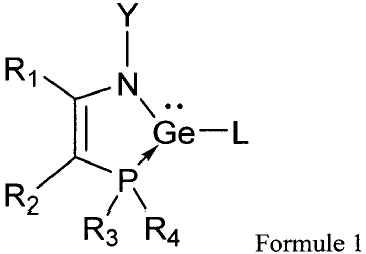 dans laquelle
L est un groupe alcoxyle comprenant 1 à 18 atomes de carbone,
Y est un groupe alkyle contenant de 1 à 20 atomes de carbone, ou un groupe aryle contenant de 6 à 18 atomes de carbone,
les groupes R₁ et R₂, identiques ou différents, représentent un atome d'hydrogène, un groupe alkyle contenant de 1 à 20 atomes de carbone, un groupe alcényle contenant de 2 à 12 atomes de carbone, un groupe aryle contenant de 6 à 18 atomes de carbone, R₁ et R₂ pouvant former ensemble un cycle substitué de 5 à 8 atomes, saturé ou insaturé, et
dans le groupement phosphine 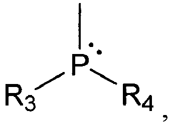 les groupes R₃ et R₄ identiques ou différents, représentent un atome d'hydrogène, un atome d'halogène, un groupe alkyle ou halogénoalkyle contenant de 1 à 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R₃ et R₄ pouvant également former, avec les atomes auxquels ils sont liés, un cycle monocyclique ou polycyclique constitué de 3 à 20 atomes.

2. Procédé selon la revendication 1, **caractérisé en ce que** le composé (B) comprenant au moins une fonction hydrogénosilyle est choisi parmi :
- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyle, et
- un polymère organique comprenant des fonctions hydrogénosilyles en positions terminales.

3. Composé organique (C) représenté par la Formule 1: 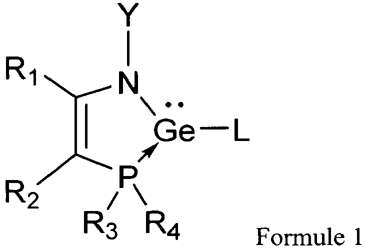 dans laquelle
L est un groupe alcoxyle comprenant 1 à 18 atomes de carbone,
Y est un groupe alkyle contenant de 1 à 20 atomes de carbone, ou un groupe aryle contenant de 6 à 18 atomes de carbone,
les groupes R₁ et R₂, identiques ou différents, représentent un atome d'hydrogène, un groupe alkyle contenant de 1 à 20 atomes de carbone , un groupe alcényle contenant de 2 à 12 atomes de carbone, un groupe aryle contenant de 6 à 18 atomes de carbone, R₁ et R₂ pouvant former ensemble un cycle substitué de 5 à 8 atomes, saturé ou insaturé, et
dans le groupement phosphine 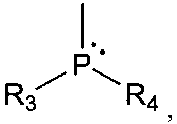 les groupes R₃ et R₄ identiques ou différents, représentent un atome d'hydrogène, un atome d'halogène, un groupe alkyle ou halogénoalkyle contenant de 1 à 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R₃ et R₄ pouvant également former, avec les atomes auxquels ils sont liés, un cycle monocyclique ou polycyclique constitué de 3 à 20 atomes.

4. Composé selon la revendication 3, **caractérisé en ce que** le groupement phosphine est représenté par les formules : 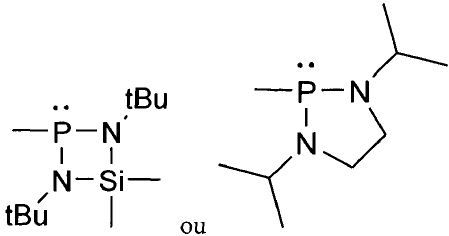 où *t*Bu est le groupe *tert*-butyle*.*

5. Composé selon les revendications 3 ou 4, **caractérisé en ce que** L est un groupe alcoxyle choisi parmi le méthoxy, l'éthoxy, le propoxy et le butoxy.

6. Composé selon l'une quelconques des revendications 3 à 5, **caractérisé en ce que** L est un groupe éthoxy.

7. Composé selon l'une quelconques des revendications 3 à 6, **caractérisé en ce que** R₁ et R₂ forment ensemble un cycle substitué de 5 à 8 atomes, saturé ou insaturé, dans lequel deux des substituants forment un pont de 1 à 3 atomes sur ledit cycle.

8. Composé selon l'une quelconques des revendications 3 à 7, **caractérisé en ce que** le composé organique (C) de Formule 1 présente la structure suivante : 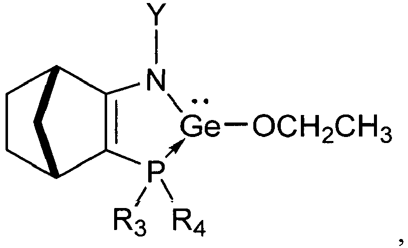 dans laquelle
Y est 2,6-*i*Pr₂-C₆H₃ et,
le groupement phosphine est représenté par les formules : 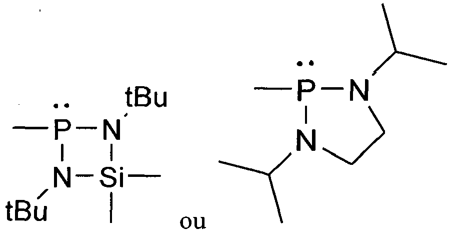 où tBu est le groupe tert-butyle.

9. Composé selon l'une quelconques des revendications 3 à 8, **caractérisé en ce que** le composé organique (C) présente la structure suivante : 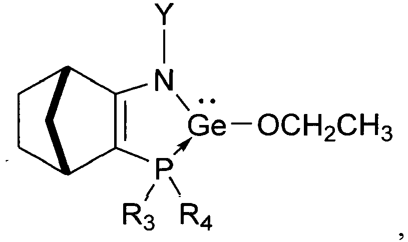 dans laquelle
Y est 2,4,6-triméthyle-C₆H₂, et
le groupement phosphine est représenté par la formule : 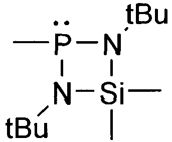 où *t*Bu est le groupe *tert*-butyle.

10. Utilisation d'un composé organique (C) selon l'une quelconque des revendications 3 à 9 comme catalyseur d'hydrosilylation.

11. Composition comprenant
- au moins un composé insaturé (A) comprenant au moins une fonction cétone ou une fonction aldéhyde,
- moins un composé (B) comprenant au moins une fonction hydrogénosilyle, et
- un catalyseur choisi parmi les composés organiques (C) selon l'une quelconques des revendications 3 à 9.

12. Composition selon la revendication 11, **caractérisée en ce que** la concentration molaire en catalyseur dans la composition est de 0,5% à 10%, de préférence de 1% à 7,5%, et de façon plus préférée de 1,5% à 5,5% par rapport au nombre de mole de composé insaturé (A).

## Patentansprüche

1. Verfahren zur Hydrosilylierung einer ungesättigten Verbindung (A) mit mindestens einer Ketonfunktion oder einer Aldehydfunktion mit einer Verbindung (B) mit mindestens einer Hydrogensilylfunktion,
wobei das Verfahren **dadurch gekennzeichnet ist, dass** es durch eine organische Verbindung (C) der Formel 1: 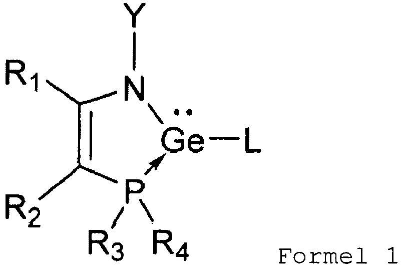 in der
L für eine Alkoxygruppe mit 1 bis 18 Kohlenstoffatomen steht,
Y für eine Alkylgruppe mit 1 bis 20 Kohlenstoffatomen oder eine Arylgruppe mit 6 bis 18 Kohlenstoffatomen steht,
die Gruppen R₁ und R₂ gleich oder verschieden sind und für ein Wasserstoffatom, eine Alkylgruppe mit 1 bis 20 Kohlenstoffatomen, eine Alkenylgruppe 2 bis 12 Kohlenstoffatomen oder eine Arylgruppe mit 6 bis 18 Kohlenstoffatomen stehen, wobei R₁ und R₂ zusammen einen gesättigten oder ungesättigten, substituierten Ring mit 5 bis 8 Atomen bilden können, und
in der Phosphingruppe 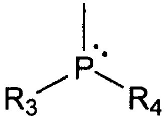 die Gruppen R₃ und R₄ gleich oder verschieden sind und für ein Wasserstoffatom, ein Halogenatom, eine Alkyl- oder Halogenalkylgruppe mit 1 bis 20 Kohlenstoffatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen, wobei R₃ und R₄ auch mit den Atomen, an die sie gebunden sind, einen monocyclischen oder polycyclischen Ring aus 3 bis 20 Atomen bilden können, katalysiert wird.

2. Verfahren nach Anspruch 1, **dadurch gekennzeichnet, dass** die Verbindung (B) mit mindestens einer Hydrogensilylfunktion aus
- einer Silan- oder Polysilanverbindung mit mindestens einem an ein Siliciumatom gebundenen Wasserstoffatom,
- einer Organopolysiloxanverbindung mit mindestens einem an ein Siliciumatom gebundenen Wasserstoffatom, vorzugsweise einer Organopolysiloxanverbindung mit mindestens zwei Hydrogensilylfunktionen pro Molekül, und
- einem organischen Polymer mit Hydrogensilylfunktionen in endständigen Positionen
ausgewählt wird.

3. Organische Verbindung (C) der Formel 1: 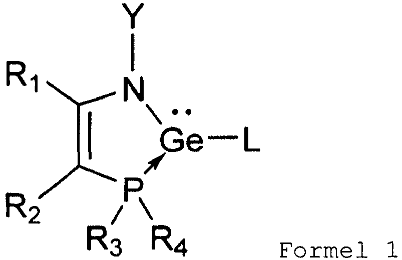 in der
L für eine Alkoxygruppe mit 1 bis 18 Kohlenstoffatomen steht,
Y für eine Alkylgruppe mit 1 bis 20 Kohlenstoffatomen oder eine Arylgruppe mit 6 bis 18 Kohlenstoffatomen steht,
die Gruppen R₁ und R₂ gleich oder verschieden sind und für ein Wasserstoffatom, eine Alkylgruppe mit 1 bis 20 Kohlenstoffatomen, eine Alkenylgruppe 2 bis 12 Kohlenstoffatomen oder eine Arylgruppe mit 6 bis 18 Kohlenstoffatomen stehen, wobei R₁ und R₂ zusammen einen gesättigten oder ungesättigten, substituierten Ring mit 5 bis 8 Atomen bilden können, und
in der Phosphingruppe 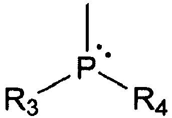 die Gruppen R₃ und R₄ gleich oder verschieden sind und für ein Wasserstoffatom, ein Halogenatom, eine Alkyl- oder Halogenalkylgruppe mit 1 bis 20 Kohlenstoffatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen, wobei R₃ und R₄ auch mit den Atomen, an die sie gebunden sind, einen monocyclischen oder polycyclischen Ring aus 3 bis 20 Atomen bilden können.

4. Verbindung nach Anspruch 3, **dadurch gekennzeichnet, dass** die Phosphingruppe durch die folgenden Formeln wiedergegeben wird: 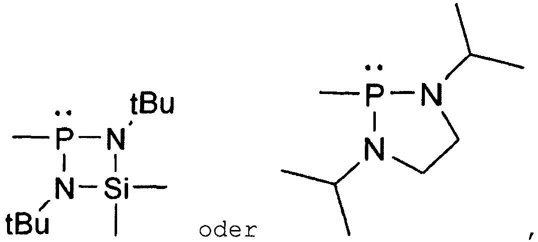 wobei tBu für die *tert*-Butylgruppe steht.

5. Verbindung nach Anspruch 3 oder 4, **dadurch gekennzeichnet, dass** L für eine Alkoxygruppe steht, die aus Methoxy, Ethoxy, Propoxy und Butoxy ausgewählt ist.

6. Verfahren nach einem der Ansprüche 3 bis 5, **dadurch gekennzeichnet, dass** L für eine Ethoxygruppe steht.

7. Verbindung nach einem der Ansprüche 3 bis 6, **dadurch gekennzeichnet, dass** R₁ und R₂ zusammen einen gesättigten oder ungesättigten substituierten Ring mit 5 bis 8 Atomen bilden, in dem zwei der Substituenten eine 1- bis 3-atomige Brücke über dem Ring bilden.

8. Verbindung nach einem der Ansprüche 3 bis 7, **dadurch gekennzeichnet, dass** die organische Verbindung (C) der Formel 1 die folgende Struktur aufweist: 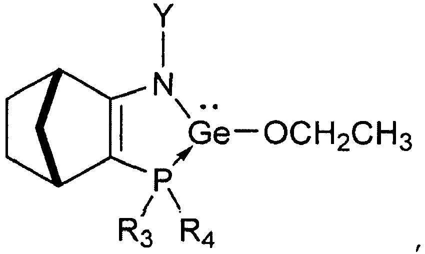 in der
Y für 2,6-*i*Pr₂-C₆H₃ steht und
die Phosphingruppe durch die folgenden Formeln wiedergegeben wird: 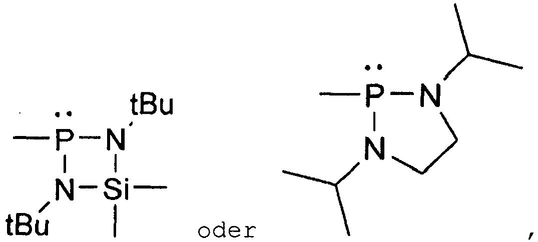 wobei tBu für die tert-Butylgruppe steht.

9. Verbindung nach einem der Ansprüche 3 bis 8, **dadurch gekennzeichnet, dass** die organische Verbindung (C) die folgende Struktur aufweist: 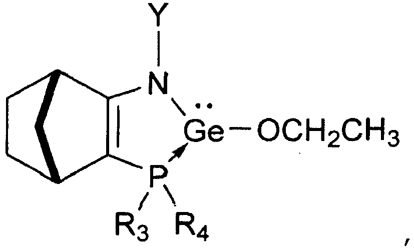 in der
Y für 2,4,6-Trimethyl-C₆H₂ steht und
die Phosphingruppe durch die folgende Formel wiedergegeben wird: 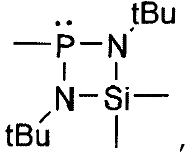 wobei tBu für die tert-Butylgruppe steht.

10. Verwendung einer organischen Verbindung (C) nach einem der Ansprüche 3 bis 9 als Hydrosilylierungskatalysator.

11. Zusammensetzung, umfassend
- mindestens eine ungesättigte Verbindung (A) mit mindestens einer Ketonfunktion oder einer Aldehydfunktion,
- mindestens eine Verbindung (B) mit mindestens einer Hydrogensilylfunktion und
- einen Katalysator, der aus den organischen Verbindungen (C) nach einem der Ansprüche 3 bis 9 ausgewählt ist.

12. Zusammensetzung nach Anspruch 11, **dadurch gekennzeichnet, dass** die molare Konzentration an Katalysator in der Zusammensetzung 0,5 % bis 10 %, vorzugsweise 1 % bis 7,5 % und weiter bevorzugt 1,5 bis 5,5 %, bezogen auf die Molzahl der ungesättigten Verbindung (A), beträgt.

## Claims

1. Process for the hydrosilylation of an unsaturated compound (A) comprising at least one ketone function or aldehyde function, with a compound (B) comprising at least one hydrogenosilyl function,
said process being **characterized in that** it is catalyzed with an organic compound (C) represented by Formula 1: 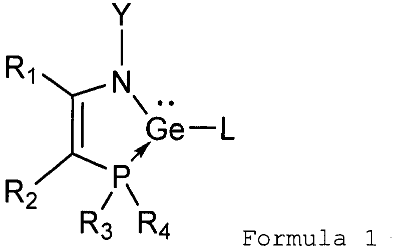 in which
L is an alkoxy group comprising from 1 to 18 carbon atoms,
Y is an alkyl group containing from 1 to 20 carbon atoms or an aryl group containing from 6 to 18 carbon atoms,
the groups R₁ and R₂, which may be identical or different, represent a hydrogen atom, an alkyl group containing from 1 to 20 carbon atoms, an alkenyl group containing from 2 to 12 carbon atoms, an aryl group containing from 6 to 18 carbon atoms, R₁ and R₂ together possibly forming a saturated or unsaturated, substituted ring of 5 to 8 atoms, and
in the phosphine group 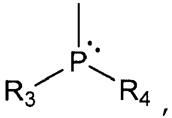 the groups R₃ and R₄, which may be identical or different, represent a hydrogen atom, a halogen atom, an alkyl or a haloalkyl group containing from 1 to 20 carbon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms; R₃ and R₄ also possibly forming, with the atoms to which they are attached, a monocyclic or polycyclic ring consisting of 3 to 20 atoms.

2. Process according to Claim 1, **characterized in that** compound (B) comprising at least one hydrogenosilyl function is chosen from:
- a silane or polysilane compound comprising at least one hydrogen atom bonded to a silicon atom,
- an organopolysiloxane compound comprising at least one hydrogen atom bonded to a silicon atom, preferably an organopolysiloxane compound comprising, per molecule, at least two hydrogenosilyl functions, and
- an organic polymer comprising hydrogenosilyl functions in end positions.

3. Organic compound (C) represented by Formula 1: 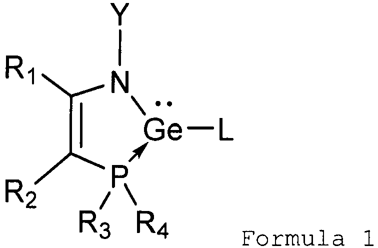 in which
L is an alkoxy group comprising from 1 to 18 carbon atoms,
Y is an alkyl group containing from 1 to 20 carbon atoms or an aryl group containing from 6 to 18 carbon atoms,
the groups R₁ and R₂, which may be identical or different, represent a hydrogen atom, an alkyl group containing from 1 to 20 carbon atoms, an alkenyl group containing from 2 to 12 carbon atoms, an aryl group containing from 6 to 18 carbon atoms, R₁ and R₂ together possibly forming a saturated or unsaturated, substituted ring of 5 to 8 atoms, and
in the phosphine group 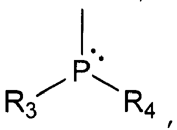 the groups R₃ and R₄, which may be identical or different, represent a hydrogen atom, a halogen atom, an alkyl or a haloalkyl group containing from 1 to 20 carbon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms; R₃ and R₄ also possibly forming, with the atoms to which they are attached, a monocyclic or polycyclic ring consisting of 3 to 20 atoms.

4. Compound according to Claim 3, **characterized in that** the phosphine group is represented by the formulae: 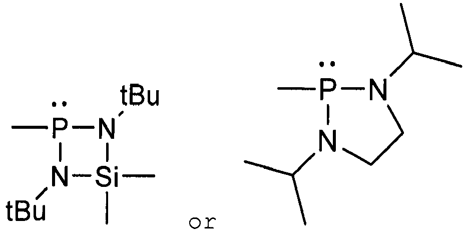 in which tBu is the *tert*-butyl group.

5. Compound according to Claims 3 or 4, **characterized in that** L is an alkoxy group chosen from methoxy, ethoxy, propoxy and butoxy.

6. Compound according to any one of Claims 3 to 5, **characterized in that** L is an ethoxy group.

7. Compound according to any one of Claims 3 to 6, **characterized in that** R₁ and R₂ together form a saturated or unsaturated substituted ring of 5 to 8 atoms, in which two of the substituents form a bridge of 1 to 3 atoms on said ring.

8. Compound according to any one of Claims 3 to 7, **characterized in that** the organic compound (C) of Formula 1 has the following structure: 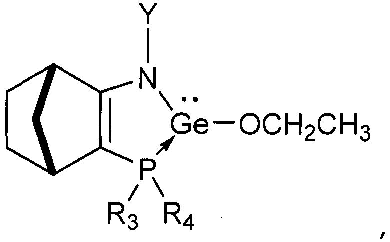 in which
Y is 2, 6-*i*Pr₂-C₆H₃, and
the phosphine group is represented by the formulae: 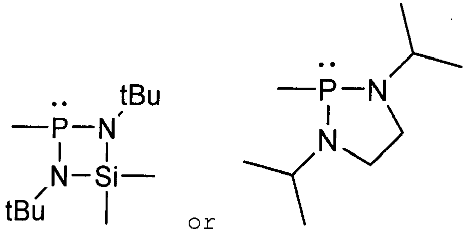 in which tBu is the tert-butyl group.

9. Compound according to any one of Claims 3 to 8, **characterized in that** the organic compound (C) has the following structure: 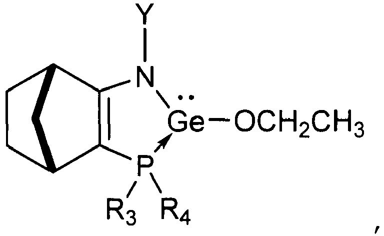 in which
Y is 2, 4, 6-trimethyl-C₆H₂, and
the phosphine group is represented by the formula: 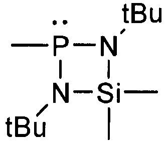 in which tBu is the tert-butyl group.

10. Use of an organic compound (C) according to any one of Claims 3 to 9, as a hydrosilylation catalyst.

11. Composition comprising:
- at least one unsaturated compound (A) comprising at least one ketone function or aldehyde function,
- at least one compound (B) comprising at least one hydrogenosilyl function, and
- a catalyst chosen from the organic compounds (C) according to any one of Claims 3 to 9.

12. Composition according to Claim 11, **characterized in that** the molar concentration of catalyst in the composition is from 0.5% to 10%, preferably from 1% to 7.5% and more preferably from 1.5% to 5.5% relative to the number of moles of unsaturated compound (A).
